# EUROPEAN PATENT SPECIFICATION

(11) **EP 2 044 903 B1**
(45) Date of publication and mention of the grant of the patent: **02.03.2011**
(21) Application number: 08165661.3
(22) Date of filing: 01.10.2008
(51) Int. Cl.: A61C 1/08, A61C 19/00

(54) **Method for making surgical guides and six degrees-of-freedom pointing device**
Verfahren zur Herstellung von chirurgischen Führungsschablonen und Hinweisanordnung mit sechs Freiheitsgraden
Procédé de fabrication de guides chirurgicaux et dispositif de pointage à six degrés de liberté

(30) Priority: 03.10.2007 IT SV20070025
(43) Date of publication of application: 08.04.2009
(73) Proprietor: Micerium SPA, 16030 Avegno GE (IT); Frascaria, Massimo, 67100 L'Aquila (IT)
(72) Inventor: Frascaria, Massimo, I-67100, L'Aquila (IT)
(74) Representative: Karaghiosoff, Giorgio Alessandro

(56) References cited:
- WO-A1-99/26540
- AT-B- 392 412
- CA-A1- 2 505 283
- DE-A1- 19 709 215
- FR-A1- 2 808 669
- US-A- 5 927 982
- US-A1- 2001 053 510

## Description

The present invention relates to a method for making surgical guides and for the guided transfer in the human oral cavity of surgical trajectories planned by computerized three-dimensional diagnostic imaging systems and auxiliary six degrees-of-freedom pointing device.

Osseointegrated implant dentistry currently is one of the main increasing and developing strategic area both in the research field and in clinical practice.

Particularly during the last years it has been one of the therapeutical procedures in the dentistry field allowing to radically change the therapeutical approach towards the edentulous patient, making rehabilitative treatment plans possible and predicable which were not considered possible up to some years ago.

Dental implants act for replacing natural roots of teeth perfectly integrating into soft and hard tissues according to the osseointegration concept that is now well-established and this allows a safe and effective support for total prostheses, crowns or fixed bridges to be provided.

In the past years performance standards of implants have been defined on a purely surgical base and therefore the priority research for an optimal primary stability in anatomically more favourable surgical sites, considering the osseointegration point of view, led often the surgeon to introduce implants in areas that often were not compatible with the optimal prosthetic position, thus compromising the functional and aesthetical result of all the rehabilitation.

The need of increasingly aesthetical prostheses and the continuous evolution of implant surgical techniques led in time the implant dentist to insert implants on the basis of a preliminary implant-prostethic project properly considering not only surgical aspects of the case but also prosthetic problems according to the already established concept of "prosthetically guided implants".

Instead of making a prosthesis adapting itself to the selected site, the implant surgeon will have to pre-operatively find and evaluate how to correct possible anatomical obstacles at soft and hard tissues of the jawbone in order to obtain the ideal positioning of the implant and consequently to obtain a functionally proper and aesthetically pleasant prosthesis.

Currently objectives of the modern implants go beyond the well-established concept of osseointegration, proposing aesthetical and functional solutions to an increasingly higher number of people through a practical and rational approach according to a trend going towards the simplification and the reduction of the invasive aspect of treatments.

The planning of the treatment on such basis and its transformation into a surgical guide will result in a greater safety and predicability by accurately and strategically positioning implants.

In the last years different systems and more or less complex methods have been proposed and developed in order to help the implant dentist when positioning implants.

Some of the above ones use techniques mapping the bone profile at the region provided for positioning the implant and subsequently transferring anatomical information to the plaster cast of the jawbone. Such technique is suitable only for edentulous cases, that is toothless, limited to one or two elements and in anatomically favourable areas having plenty of available bone, due to incomplete anatomical information that can be obtained. Moreover it is more invasive than techniques using radiodiagnostics since during the mapping step it requires the use of local anaesthetics for allowing suitable needle-shaped probes to be fixed into the oral mucosa of the patient.

Other techniques are based on information directly obtained by two-dimensional radiographic examinations used for essentially evaluating in the apical-coronal and mesial-distal direction the most favourable entrance point for the implant site anyhow without exactly defining, before the real surgical step, the depth of the bone and so the possible final inclination of the implant.

More recent techniques utilize advantages deriving from CT-Dentascan examinations allowing maxillary structures to be three-dimensionally anatomically studied in order to obtain more precise and reliable information about the three-dimensional positioning of implants by applying suitable radiopaque markers and analysing tools with a tiltable plane, able to facilitate the calculation of the most favourable angles on the basis of axes defined in proposed sites, with respect to the underlaying bone anatomy. However such techniques have some limits regarding the fact that it is not possble to perform precise and reliable calculations of angles to be given to implant axes, often due to the fact that the transfer of information collected during the examination from the radiologist to the clinician is not always correct. Therefore such techniques need the close collaboration of the radiologist in order to obtain the proper prints on film showing individualized images centered in different planes with respect to provided markers and to the reference anatomy.

More recently the possibility of using advanced imaging techniques has occurred, which are more versatile in the interactive mode and are able to help the implant dentist in developing a more rational and predictable therapeutical programme in a more precise and safe manner.

On the basis of such technology computerized planning techniques CAD-CAM and rapid prototyping techniques have been arisen which are able to create and make surgical guides for the guided positioning of implants by using the computer.

In the last ten years the Computed Axial Tomography (CAT) has become the most widespread tool used for evaluating the bone structure upon which dental implants have to be placed. To this aim software tools have been created allowing images obtained by the CAT to be processed in order to obtain a correct preoperative diagnosis and a planning of the implant installation.

However it has been found that CAT images are affected by a distortion that can be caused by the alignment of the patient during the CAT scan, to his/her movements, and to the saturation of pixels composing the image. In order to avoid the first distorsion reason centering devices can be used allowing the head of the patient to be placed perpendicularly to the axis of the implant to be installed. However this is sufficient only if a single implant needs to be installed. In order to avoid distorsions due to the alignment when various implants need to be installed with axes very different one with respect to the other as regards the direction, the patient has to be subjected to various CAT scans, and so to an excessive radiation, such that each acquisition is perpendicular to the axis of one of the implants to be installed.

Therefore software allowing the bone structure underlying the implant and its measurements to be evaluated even from a single CAT acquisition have been developed. The system called DentalVox in order to overcome the dispersion problem due to the non coplanarity between directions of teeth axes, and so of CAT acquisition axes, applies image processing techniques and particularly interpolation algorithms of original CAT axial images in order to generate new images which can belong to planes oriented differently from the plane of the original acquisition, that is oblique and sagittal paraxial images. Particularly in order to solve the distorsion problem of images upon which programmes like DentaScan, 3d/Dental, SIM/Plant will work for reconstructing a three-dimensional model of the dental arch portion where an implant has to be installed, DentalVox processes data provided by CAT, providing a new set of axial images perpendicular to the axis of any teeth, and oblique and sagittal panoramic paraxial images orthogonal thereto, therefore using a single topographic examination, i.e. a single set of images acquired along only one axis, for an implant-prosthetic project extended to all the anatomical upper and lower maxillary district.

Such technology is surely an interesting treatment opportunity both for patients and operators, but it has some rather important obstacles in being spread in large-scale, which essentially are the complexity of procedures provided by protocols, the excessive reference to virtual anatomical views which sometimes diverge too much from more conventional operative procedures, the need for information training for operators, the excessive dependence from manufacturing companies for making products and definitely high costs.

Document US 5927982 discloses a three-dimensional guidance system for dental implant insertion.

Therefore there is the need of having a low cost simplified precision system able to transfer, by means of data processed via software, directly on the plaster cast of the jawbone, precise surgical trajectories corresponding to implant axes defined in the virtual pre-surgical planning step, for easily obtaining surgical guides therefrom.

The American patent application 09/880,884 published with number US 2001 05 3510 describes a device and a method for preparing and installing a dental implant. The jawbone upon which the implant has to be positioned is analyzed by means of the Computed Axial Tomography. By using the device object of the invention it is possible to define the inclination and the entrance point of each implant, using information from the radiodiagnostic test. The method object of the invention provides a surgical guide to be made by using a mechanical device allowing each tooth of a prosthetic model that will be tested on the patient to be drilled with a certain inclination. Holes made on the prosthetic model are filled with a radiopaque agent such that the trajectory is highlighted during the image acquisition step carried out when the patient wears the prosthetic model.

Images acquired in this manner are processed by known implant planning systems such that it is possible to evaluate how much and how the final trajectory of each implant has to be corrected. Once new trajectories for each implant are defined, the prosthetic model is repositioned on the base of the device intended for making holes with a certain inclination, and trajectories for each tooth are manually corrected according to information given by the planning software.

The method and device of the above patent application have some drawbacks. A step realigning topographic images is not provided for correcting possible distorsions and moreover the method provides the plaster cast upon which the prosthetic model is positioned, that will become the surgical guide, to be manually moved various times from its seat in order to make holes for each tooth/implant and for registering position and angle of indicence, thus increasing the chance of having a positioning or calculation error of trajectories.

The long-term success of the implant-prosthetic treatment currently needs implants to be inserted according to proper surgical procedures, and needs the ability in providing and obtaining a proper anatomical-functional and aesthetical positioning of fixtures with respect to the optimal position of the final prosthetic reconstruction.

The long-term clinical experience has clearly shown that the prognosis of rehabilitations on osseointegrated implants is considerably affected by the operating precision during the surgical insertion procedure and then by a careful control of occlusive forces.

The current trend in using clinical procedures that are more and more rapid and simplified such as immediate loading, the use of prefabricated removable and/or permanent prostheses and minimally invasive flapless surgery, increasingly requires the greatest space correspondence between pre-surgical planning, the real anatomy of the patient and the final position of implants.

Within oral implant dentistry operations the anatomical-radiologic study of the oral-maxillo-facial districts aiming at positioning implants is very important in order to avoid invasions in and/or damages to important anatomical structures.

Thus the surgical operation can be carefully planned by accurately selecting implants, by means of an accurate three-dimensional orientation and by means of the accurate definition of the residual quality and quantity of the bone.

By means of such three-dimensional diagnostic systems, therefore it is possible to obtain an accurate confirmation about the position of objects, that is instruments and/or implants, inside anatomical structures, even without directly seeing the operative field.

All such conditions make the entrance and the control of surgical instruments that are usually used in the oral implant dentistry field very favourable by using precision surgical guides able to direct and keep trajectories predetermined on the basis of a project considering the entrance point, the penetration depth and the introduction angle.

The aim of the present invention is to provide a method for making surgical guides and for the guided transfer in the human oral cavity of surgical trajectories planned by computerized three-dimensional diagnostic imaging systems as defined in claim 1 and auxiliary six degrees-of-freedom pointing device as defined in claims 16 and 17 able to overcome in a simple and inexpensive way drawbacks of known devices and implant operation planning methods.

The device according to the present invention comprises:
- a rigid base for supporting the working surface
- a supporting column perpendicular to said base,
- an arm projecting from the column with means being provided at the free end thereof for removably fastening surgical instruments
- a platform upon which the jawbone cast can be put and secured, by suitable means.

Particularly said device is provided with means for adjusting the distance between the platform and the arm along the vertical z axis, with means for linearly moving the platform along the x, y axes and with means for angularly moving θx, θy, θz said platform.

The method for making surgical guides provides the use of the precision mechanical pointing device, suitably modified markers and devices for acquiring, reconstructing, treating and showing data, allowing the operator to easily, autonomously and cheaply and indireclty transfer in the non-sterile operating chamber on the anatomical plaster casts of jawbones all space information about the position of each individual planned implant fixtures, i.e. the portion of the implant to be inserted into the jawbone, and to make guides directly derived from the anatomical plaster cast, without using more complex and expensive rapid prototyping, reverse engineering and CAD-CAM techniques.

The present invention is set within the field of minimally invasive guided oral implant surgery operations. In such operations the pre-surgery planning is currently the main key to the long-term success and it is based on a in-depth clinical-technical examination and above all on suitable second-level diagnostic investigations.

Nowadays due to the technological evolution the operator has at his disposal diagnostic imaging systems that are exceptional as regards both the qualitative aspect and the biological saving, considerably reducing the amount of rays received by the patient at each examination.

Particularly computed topography examinations are currently the adopted examinations for the implant surgery since these are the only one able to provide all elements necessary for correctly and safely evaluating the case and thus for preventing complications related to the discovery of anatomical anomalies of the bone during the operative step.

By means of such type of instruments, due to highly sophisticated effective image reconstruction algorithms, it is possible to obtain in real-time detailed three-dimensional reconstructions of jawbones upon which it is possible not only to perform precise diagnosis but also to perform a virtual surgery, therefore a surgical planning using virtual fixtures of any size and type.

The present invention relates to the implant dentistry field and it is a device and a method to be used before the operation, during the planning step, able to transfer the implant position obtained by means of the computerized processing of radiographic images, directly on the anatomical plaster cast of the patient jawbone upon which a surgical transfer guide is created.

Particularly it relates to a device and method for making precision surgical guides for driving rotating surgical instruments such as a milling bit or a tool for making holes inside jawbone anatomical structures of the human body or tools for screwing parts of the implant in an easier way, observing trajectories defined by three-dimensional imaging diagnostic interactive computerized systems and virtual surgical planning systems.

The method for making radiographic and/or surgical guides provides:
- the creation of a prosthetic set-up and a jawbone cast by acquiring patient images for making a radiographic guide,
- the positioning of the radiographic guide into the patient mouth for acquiring images by performing the computerized topographic examination,
- the execution of the implant dentistry operation in a virtual environment for positioning implants in positions considered to be the ideal ones on the basis of acquired images,
   - the creation of a report with patient data regarding space coordinates of each considered implant indicating values about the linear translation position x, y, z and the angular one θx, θy, θz and about the depth of the jawbone hole,
   - the creation of a surgical guide complete with directional cannulas and the prosthesis,
   - the application of the surgical guide into the oral cavity of the patient
   - the positioning of implants and the application of prostheses.

Particularly the method of the present invention comprises the following steps:
- making at the central axis of at least a tooth of the radiographic guide at least an hole under isoparallel conditions, using the device of the present invention,
- incorporating into the radiographic guide a reference marker of known shape and size made of radiopaque material,
- graphically marking on the part of the jawbone cast corresponding to the patient gum, so called proposed crestal "reference points",
- realigning the set of base axial images provided by the computerized tomographic examination by using as reference the radiographic marker incorporated into the radiographic guide such to obtain a new set of realigned images wherein base axial images are exactly perpendicular to the axis of the reference marker and axes of holes of each tooth, said axes being made under isoparallel conditions, - Positioning the jawbone cast in an optical assisted way on the platform of the six degrees-of-freedom device for making a surgical guide complete with directional cannulas.

The method allows a customized radiographic guide to be made having the ideal prosthetic project incorporated thereto which is worn by the patient during a simple low-dosage scan such that implant-prosthetic and aesthetical-functional rehabilitations can be planned considerably simplifying the work for the implant surgeon and with a series of non negligable advantages for the patient.

In order to make a radiographic guide and/or the surgical guide allowing the implant planning i.e. trajectories of implants defined by using specific software, to be transferred into the patient mouth and therefore providing the clinical operator with the angle of incidence and the point where the hole can be drilled into the jawbone for anchoring the implant, the method provides the use of a six degrees-of-freedom device equipped with high precision control mechanisms, having an accuracy of 1/100 mm and 1/6 of degree, for the manual and/or powered adjustment of trajectories of objects, particularly dental implants, inside the space defined by a six independent adjustment axes cartesian system, through three linear translation movements along the x, y, z axes and three angular movements θx, θy, θz.

In order to improve the quality of the set of images upon which the operation virtual planning will be made a radiographic marker object is provided to be inserted on the radiographic guide defined fiducial system, made of radiopaque material, for example a titanium cylinder of known shape and size, which is firmly and strategically fastened to anatomical structures of the region of interest by means of rigid splits, allowing a common coordinate and reference system to be defined between the jawbone anatomical structure which is the subject matter of the present study and the performed diagnostic examination.

Images obtained from the patient wearing the radiographic guide suitably prepared according to the method of the present invention, before being transferred to the software for generating the three-dimensional cast of the dental arch where the implant has to be made, are analysed by a software suitably studied for automatically realigning the set of CAT images along a predetermined axis necessary for achieving a precise geometrical correspondence of the three-dimensional virtual anatomical model, reconstructed by the computer, with the real anatomical plaster cast of the patient, in the proper three-dimensional space relation.

Current diagnostic imaging tomographic methods allow morphological, biochemical variables to be measured in vivo which are useful for evaluating the condition of a particular area of the human body.

Each investigation method has peculiarities and limits in describing the same anatomical part subject matter of the study considering the space and time point of view. In the case of intra-subject analyses it is necessary to bring different biomedical images to a single reference space, such to obtain a perfect correspondence of the same anatomical structure in the different studies. Topographic techniques describe an anatomical area as a sequence of anatomically neighbouring sections and therefore these can be represented as a three-dimensional volume related to a specific space coordinate system of the acquisition tomograph.

The integration of the different studies is based on the use of registering techniques allowing different space reference systems to be realigned by estimating necessary geometrical transformation parameters. Therefore the use of reference markers is known i.e. objects having a known geometry composed of a material visible in the selected image method which are directly or indirectly fastened into the area to be analysed. Usually markers are elements of some millimeters having a spherical or cylindrical shape, whose positions in space, corresponding to positions of their barycentres, represent reference points from which the geometrical transformation has to be estimated.

In the specific case of implant dentistry a new use of markers has been developed in order not to obtain an exact correspondence of the same anatomical structures in the different sets of images but in order to obtain a more precise correspondence between the virtual planning performed on the set of realigned images and the jawbone cast upon which the surgical guide is prepared for correctly positioning implants into the patient mouth.

The set of images acquired by using known devices, for example CT-DENTASCAN and/or the Computed Volumetric Tomography, after being realigned are treated by means of software tools dedicated for processing, displaying images and digitally reconstructing views different from the axial ones. For example it is possible to use the IMPLANT 3D- Medialab software - La Spezia (IT) software, such to achieve the correct trajectory for each implant.

In order to help the clinician in positioning the implant the radiographic guide has to be transformed into a surgical guide considering trajectories of individual implants processed by the computer. To this aim the method provides the use of a linear laser pointing device allowing the plaster cast of the jawbone of the patient to be quickly and properly positioned on the goniometric base of the six degrees-of-freedom device, for safely and quickly defining the first order angular value, the θx axis, necessary as the starting point for the following space adjustments.

By the use of the six degrees-of-freedom device it is possible to make a surgical guide with guide cannulas for each implant fastened with the inclination and position defined during the operation virtual planning such to create a tool for the clinician useful for directing the rotating instrument directly into the patient jawbone.

The proposed method allows the accurate transfer of the trajectory of a virtual object, the dental implant, positioned inside jawbone anatomical structures, reconstructed by the computer by means of dedicated planning software, starting from data resulting from the computed topographic examination of the patient. Such procedure is direcly made on the anatomical model of the jawbone represented by the plaster cast, in order to make individual osteotomic guides to be used during the surgical step for transferring implant trajectories planned by the computer, directly into the jawbone of the patient in the correct predetermined space relation.

The device and the proposed method have a strategic importance for considerably increasing the safety level of the surgical operation, since they allow important anatomical structures to be accurately found and not to be penetrated during the operation.

The device and method further allow the precision level in positioning implant inside the human body to be increased observing a predetermined prostethic project and at the same time in various situations they allow the invasive aspect of treatments to be considerably reduced when performing implant dentistry surgical operations, which can be safely performed even without opening flaps, i.e. according to protocols defined for the "Flapless" minimally invasive Implant Surgery not using bistouries or stitches but it provides a small hole to be drilled on the gum for the implant to pass through.

The device of the present invention by means of precision micrometric movement regulating means allows the linear and angular position of implants to be transferred, which has been determined before the surgical operation by using known interactive computerized planning software, in an economic, simple and very precise way by making radiographic and/or surgical guides directly on true anatomical plaster casts of jawbones, able to direct instruments of the operator during the surgical operation.

Moroever the method of the present invention represents a simplified clinical method allowing all the procedure for making and positioning implants to be managed in a very precise way even with image noise signals (scattering), considerably reducing costs, autonomously without using outer structures, remaining close to conventional clinical and laboratory procedures using as the reference model conventional plaster casts of jawbones without the need of using rapid prototyping techniques.

Further characteristics and improvements are subject of claims.

Characteristics and advantages deriving therefrom will be more clear from the following description of some embodiments shown in annexed drawings wherein:
Fig. 1 is a schematic view of the six degress-of-freedom device subject of the present invention,
Fig.2 is the operating principle of the control cartesian system of the six degrees-of-freedom device subject of the present invention,
Fig.3 is a schematic view of a component, i.e. the goniometric base, of the six degrees-of-freedom device subject of the present invention,
Fig.4 is schematic view of a component, i.e. the digital micrometer, of the six degrees-of-freedom device subject of the present invention,
Fig.5 is a component, i.e. the digital micrometer, of the six degrees-of-freedom device subject of the present invention,
Fig.6 is a schematic view of a component, i.e the base for the linear movement along the X and Y axes, of the six degrees-of-freedom device subject of the present invention,
Fig.7 is the six degrees-of-freedom device subject of the present invention, showing particularly the goniometric base for adjusting three angular values, the base for the linear movement along the X and Y axes and the magnetic fastening circular base,
Fig.8 is the six degrees-of-freedom device subject of the present invention, showing particularly the magnetic fastening circular base and the component for the movement along the Z axis,
Fig. 9 is the six degrees-of-freedom device subject of the present invention complete with the laser module for positioning the jawbone plaster cast,
Fin.10 is the six degrees-of-freedom device subject of the present invention complete with the drilling device,
Figs. 11-13 are a method operating diagram,
Fig.14 are jawbone plaster casts provided with an ideal prostethic solution,
Fig.15 is a radiographic guide wherein the reference system is incorporated and wherein holes have been made at the central prostethic axis of each tooth,
Fig. 16 is an image obtained during the virtual planning of the prosthetic operation,
Fig.17 is the result of the virtual planning that is a diagram with patient data about space coordinates of each considered implant,
Figs.18a and 18b are the use of the pointing laser guide for properly positioning the jawbone cast on the supporting platform of the six degrees-of-freedom device,
Fig.19 is the drilling of the plaster cast locked on the six degrees-of-freedom device subject of the present invention, according to trajectories defined during the virtual planning step,
Fig.20 is the positioning of guide cannulas on the plaster cast for making the surgical guide,
Fig.21 is the edentolous portion of the patient arch upon which the surgical guide will be positioned,
Fig.22 is the positioning of the surgical guide at the edentolous portion of the patient arch.

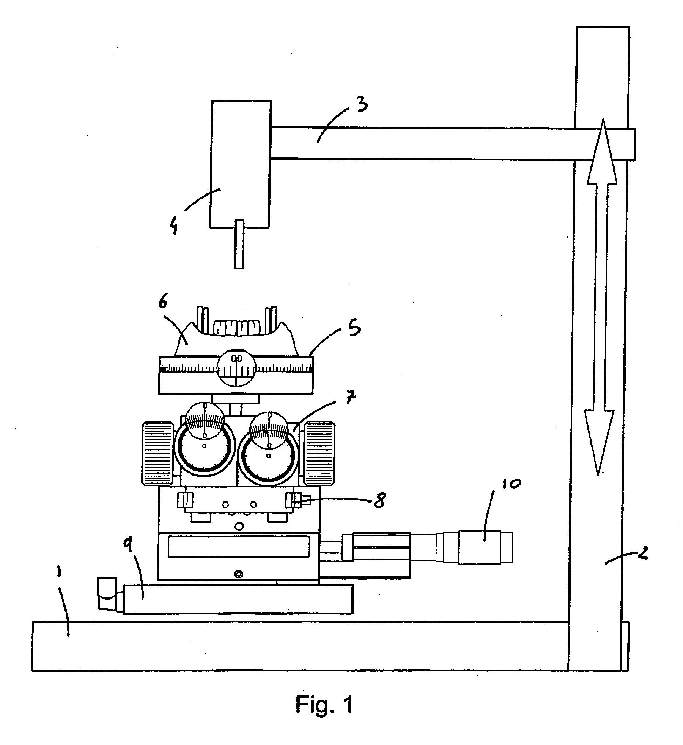

Such as shown in figure 1 the device of the present invention comprises a rigid metal supporting base 1 for using the device on a working surface, and a supporting column 2 perpendicular to said base 1 whose end, opposite with respect to the end fastened to the base 1, overhangingly supports an arm 3 that, by suitable means, such as a slide or a carriage sliding along a vertical guide, can be moved up-and-down, while being always perpendicular to the supporting base 1.

The free end of said arm 3 is provided with means 4 for removably fastening surgical apparatuses, particularly rotating instruments such as drills 12, instruments allowing components of the implant to be screwed more easily or the like.

The device is provided with a six degrees-of-freedom platform 5 upon which the plaster cast 6 of the jawbone, or the cast made of similar materials, can be put and fastened, by suitable means, for example screw means, upon which the radiographic and/or surgical guide will be placed.

According to a preferred embodiment the linear movement along the x, y axes and the angular movement θx, θy, θz of the platform 5 is obtained by combining together a goniometric working base 7 and a micrometric working base 8 for the movement along the x, y axes.

Particularly the goniometric base 7 rests in line with the linear movement micrometric base 8 and it is possible to make them integral by the provision of a magnetic base 9 arranged between the micrometric base 8 and the supporting base 1.

It is possible to provide the column 2 with the arm 3 supporting surgical instruments to be slidably connected to the base 1 such that said column and so surgical instruments associated thereto can be moved nearer or away with respect to the platform supporting the cast 6 of the jawbone.

The micrometric base 8 allows the platform 5 upon which the plaster cast 6 of the jawbone rests to be translated on a plane parallel to the working or supporting surface of the device, that is along the x and y axes.

As regards the vertical translation, i.e. along the z axis, there are provided means for adjusting the distance of the platform 5 and of the arm 3 projecting from the column. According to a preferred embodiment it is possible to provide the column 2 to have means for vertically up-and-down moving and for stopping the arm 3 in the predetermined position with surgical instruments such as drills 12 or the like removably associated thereto.

The above mentioned micrometric and goniometric bases 7 and 8 are of the type usually used in micromechanics laboratories therefore allowing to transmit to the plaster cast 6 and to the surgical guide associated thereto high resolution and precise trajectories by means of a precise adjustment.

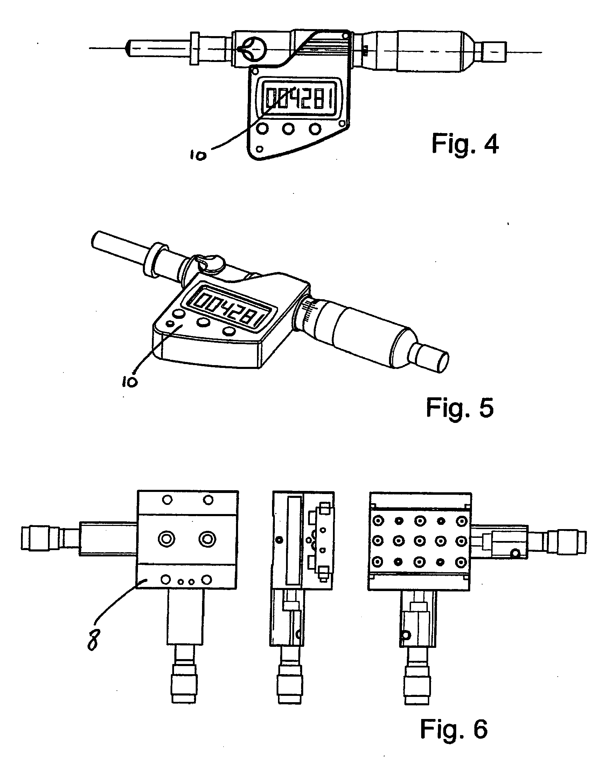

Particularly, such as shown in figures 4-6, bases 7 and 8 and/or the column 2 are equipped with mechanisms adjusting linear movements, high-accurately controlling and displaying said values, such as digital micrometers 10, having an accuracy range of 1/100 mm for linear translations on the x, y, z axes and mechanisms for setting, controlling and displaying angular values with an accuracy of 1/6 of degree for the three angular movements θx, θy, θz such to obtain a manual and/or powered adjustment of the trajectory of dental implants within the space defined by a cartesian system made of six independent adjustment axes.

The device according to the present invention allows proper trajectories defined by using a planning software, to be given to the plaster cast 6 causing the drill to be moved only along the z axis, while remaining movements i.e. the translation along the x and y axes and angular movements θx, θy, θz are performed by the platform 5 upon which the plaster cast 6 rests by adjusting the goniometric base 7 and the micrometric base 8. Thus it is possible to transfer results provided by known planning software to the cast and to autonomously create a surgical guide, without using necessarily the stereolithography tecnique or outer laboratories that, by using known techniques, develop a surgical guide from results obtained by the planning software.

According to a preferred embodiment the device is provided with a pointing laser module 11 in order to have an optically-assisted positioning of the cast 6 on the platform 5. Said module 11, associated to the column 2 and/or to the arm 3 supporting surgical instruments, allows the plaster cast 6 of the patient jawbone to be quickly and properly positioned on the six degrees-of-freedom platform of the device. Particularly the pointing laser 11 is used for quickly and safely defining the first order angular value θx, necessary as a starting point for the following space adjustment.

The six degrees-of-freedom pointing device of the present invention being provided with high mechanical precision mechanisms controlling the movement is able to exactly transfer the position and trajectory defined by means of dental implant operation planning software for each considered individual implant on the plaster cast 6 and on the surgical guide, which in turn will allow trajectories to be transferred into the patient mouth.

The long-term success of the implant-prosthetic treatment needs implants to be inserted according to proper surgical procedures, and needs the ability in providing and obtaining a proper anatomical-functional and aesthetical positioning of fixtures, i.e. portions of the implant to be introduced into the jawbone, with respect to the final prosthetic reconstruction. The long-term clinical experience has clearly shown that the prognosis of rehabilitations on osseointegrated implants is considerably affected by the operating precision during the surgical introduction procedure and then by a careful control of occlusive forces. The current trend in using clinical procedures that are more and more rapid and simplified such as immediate loading, the use of prefabricated removable and/or permanent prostheses and minimally invasive flapless surgery, increasingly requires the greatest space corrispondence between pre-surgical planning, the real anatomy of the patient and the final position of implants.

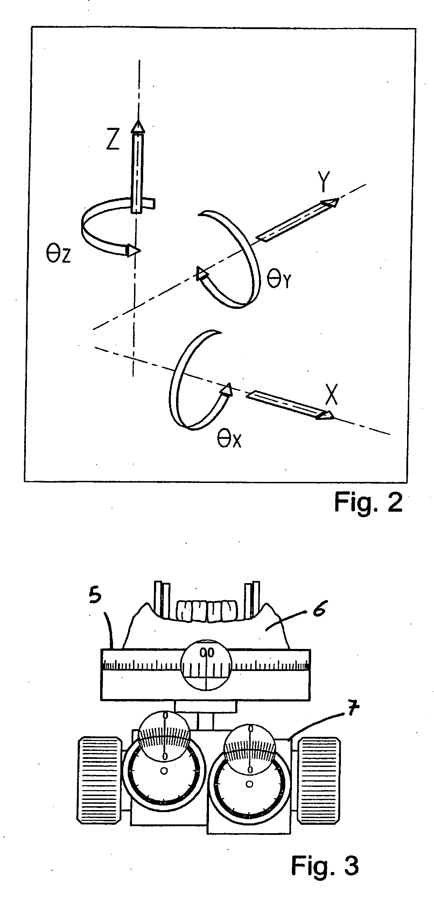

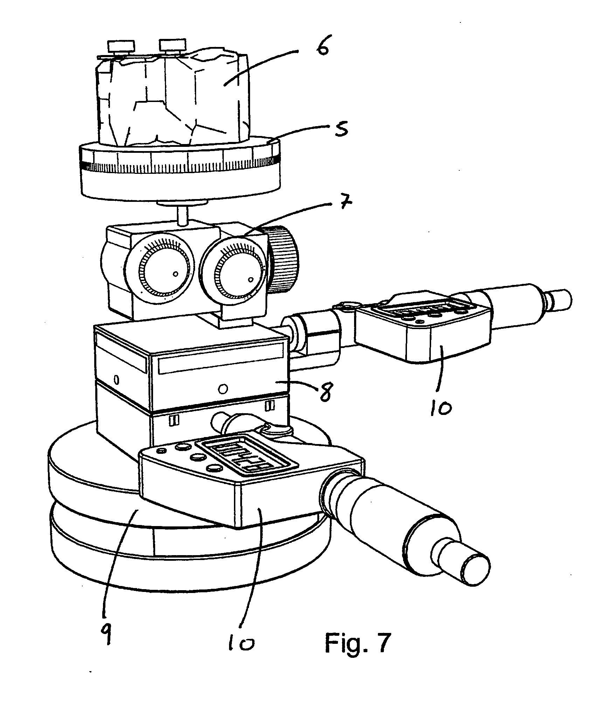

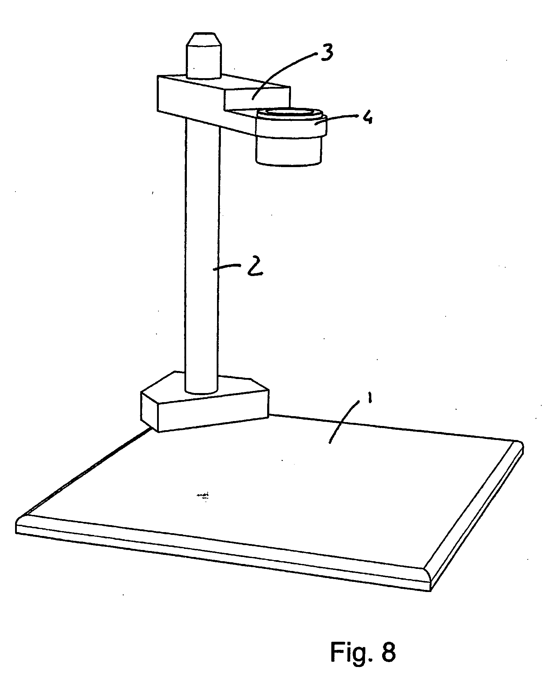

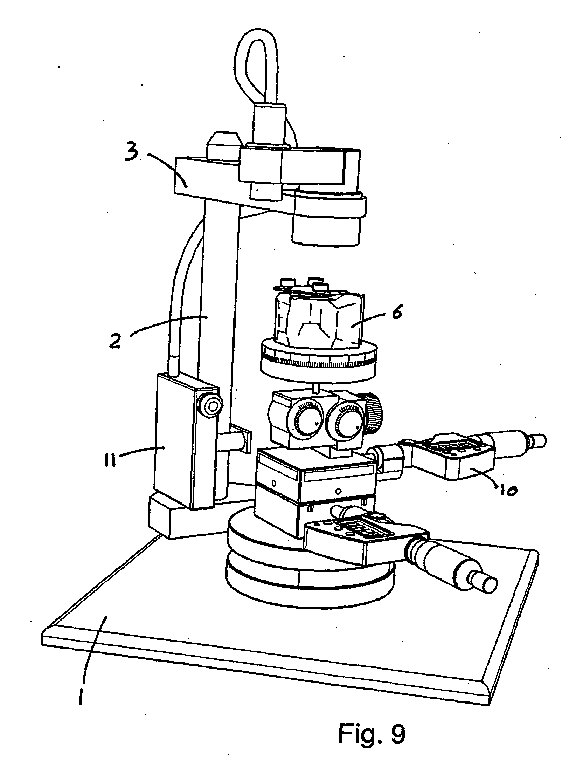

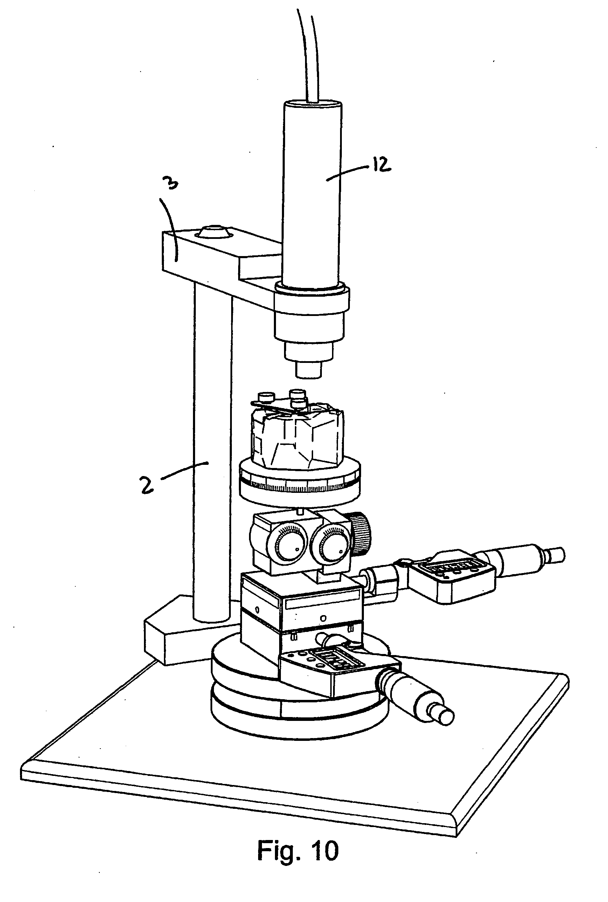

By using the device described above and shown in figures 1-10 it is possible to transfer to the plaster cast 6 and so into the patient mouth the position and the trajectory of a dental implant virtually placed inside anatomical maxillary structures after their computer reconstruction by means of dedicated planning software, starting from data obtained by the tomographic computerized examination of the patient, performed for example by CT-DENTASCAN and/or Computed Volume Tomography.

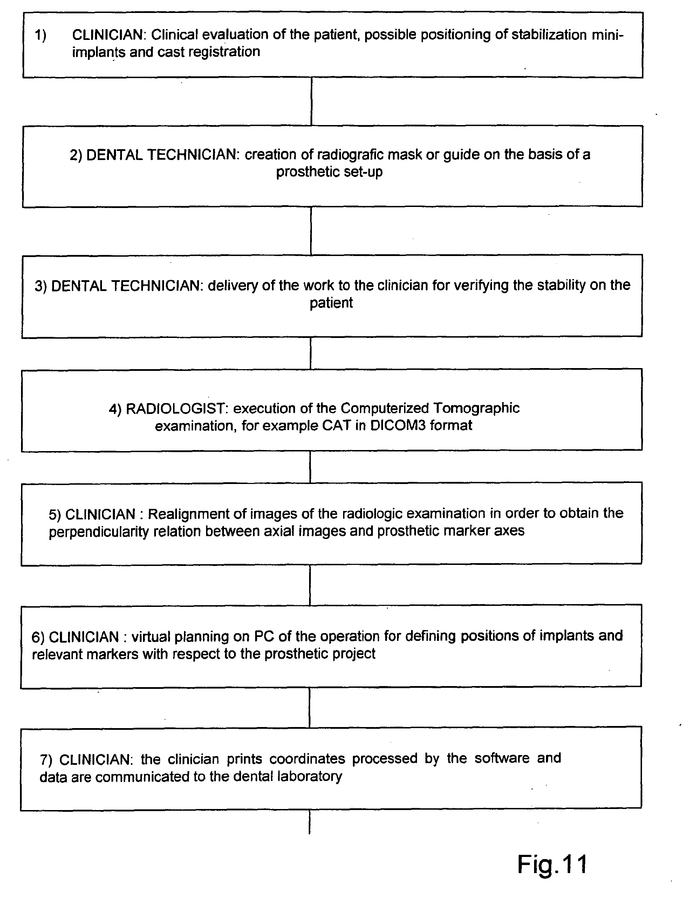

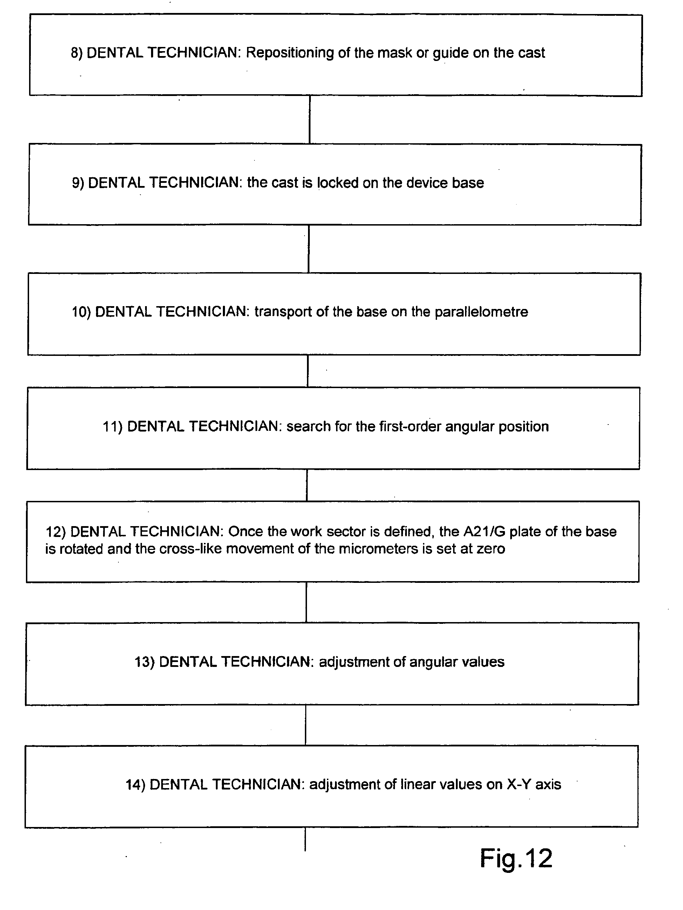

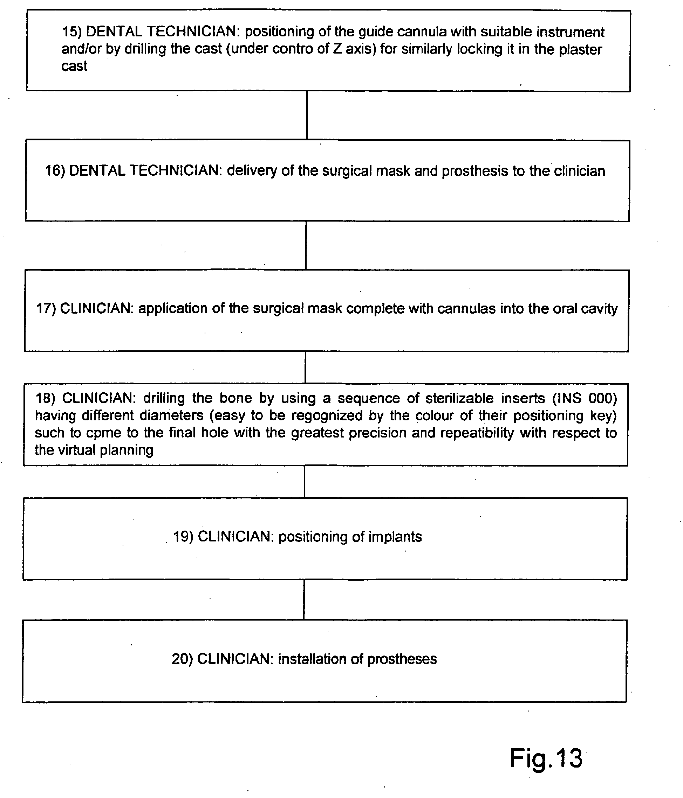

As shown in figures 11-13 the method for making radiographic and/or surgical guides and for the guided transfer in the human oral cavity of surgical trajectories planned by computerized three-dimensional diagnostic imaging systems, subject of the present invention, provides, as the starting step, the laboratory creation of a prosthetic set-up 13, i.e. a copy of missing teeth, representing as much as possible the ideal prosthetic solution for the case under treatment.

The creation of the prosthetic set-up 13 provides a clinical evaluation of the patient made by clinical personnel, with a possible positioning of stabilization mini implants and by registering casts by means of conventional techniques.

The material used for making the cast 6 of the jawbone subject of the present invention can be of different type and it is selected depending on requirements. The selected material allows replicas of the jawbone to be obtained with a lower or higher accuracy level. It is possible to provide said cast 6 to be made of plaster. The technician operates on the cast 6 of the jawbone in order to shape missing teeth till obtaining a prosthetic set-up 13 representing as much as possible the final prosthetic situation.

The clinical and laboratory protocol for positioning dental implants provides the use of an articulator mechanically reproducing the mastication using casts of the upper and lower arches. This allows the dental prosthesis to be verified whether it is aesthetically and functionally optimal.

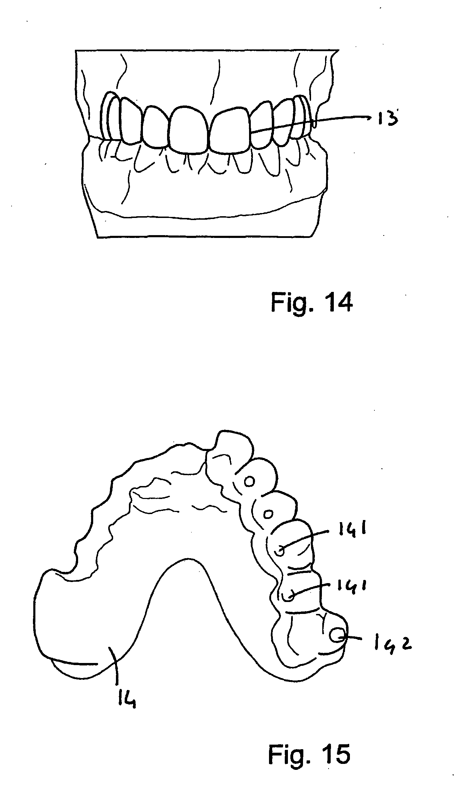

Figure 14 shows a plaster cast 6 of arches of a patient provided with the prosthetic element.

Following the approval by the clinical equipe, that has tested the prosthetic arch on the patient as regards the shape, function and aesthetics, the prosthesis is transformed into a firm, customized radiographic guide 14, by using radiopaque resin, in order to make the implant-prosthetic project visible in the radiography examination.

Therefore the dental technician goes on by creating a radiographic guide or mask 14 on the basis of the prosthetic set-up.

The method object of the present invention provides each radiopaque tooth of the guide 14 to have a central hole 141. As an alternative it is possible to provide holes 141 to be made only at some teeth such that the introduction of implants in specific locations of the edentolous area of the patient can be planned, for example if the prosthesis is composed of various teeth joint together and said prosthesis is attached to the jawbone by a limited number of implants.

Conventionally speaking, the diameter of the hole 141 is 2 mm but it is possible to make holes with a greater diameter.

Such as shown in figure 15 a through hole 141 is made passing in the tooth point, i.e. the occlusion surface, up to the surface of the radiopaque guide 14 that will contact the gum.

On the plaster cast 6 of the jawbone ideal emergency areas of implants and entrance locations of implant pins are marked.

Holes 141 are provided to be made under isoparallel conditions, by using the device of the present invention.

In order to achieve such condition the cast 6 of the jawbone complete with the radiopaque guide 14 is positioned and locked on the six degrees-of-freedom platform 5 of the device.

Due to means controlling the goniometric base 7 angular values θx, θy, θz are set at zero and the platform 5 with the cast 6 of the jawbone is translated, setting values on digital micrometers, along the x, y axes such to drill an hole 141 if possible a central hole on the occlusion surface of each tooth, translating the arm 3 supporting the drill 12 and so the drill 12 itself, along the z axis of the reference cartesian system.

Therefore the prosthetic axis of each radiopaque tooth made of resin is drilled under isoparallel condition, by using as the reference position the setting at zero of the three angular values of the goniometric base 7 of the pointing device to which the platform 5 is associated for fastening the cast 6 of the jawbone.

It is possible for the hole 141 that has been made not to be the definitive one i.e. it is possible for it not to have the same angular and linear coordinates of holes that will be drilled in prostheses that will be fastened to the patient mouth. The final exact coordinates will be defined during the virtual operation planning step.

The method subject of the present invention provides a reference marker system called fiducial system to be incorporated, being of known shape and size made of radiopaque material, for example a titanium cylinder 142, firmly arranged, in a strategic position easy to be find within the guide 14. The method provides the hole wherein the cylinder 142 is applied to be always made by using parameters of preceding holes i.e. it is drilled by setting at zero angular values of the goniometric base 7 and therefore of the platform 5 upon which the cast 6 of the jawbone is fastened.

According to a preferred embodiment, such as shown in figure 15, in a different area of the radiopaque guide 14 a radiopaque cylinder 142 is applied. The hole wherein the cylinder 142 is applied is always drilled by using parameters of previous holes i.e. it is drilled by setting at zero angular values.

The reference marker is applied to an area of the radiopaque guide 14 where there are no signal noises. Considering the final position of the prosthesis into the patient mouth, the marker is arranged away from occlusions, bridges or the like made of metal, i.e parts that can interfere with the radiographic signal during imaging necessary to plan the operation.

According to a preferred embodiment a titanium cylinder with a diameter of 2 mm and an height of 10 mm is used but it is possible to use markers having different shapes and dimensions.

As shown in figure 15 the radiographic marker made of radiopaque material with a known shape and size, firmly and strategically connected to anatomical structures of the area of interest by means of rigid elements, allows a reference and common coordinate system to be defined between the maxillary anatomical structure subject of the operation and the performed diagnostic examination.

The dental technician by using steps of the method subject of the present invention and by using the device described above makes a radiographic guide 14 on the basis of a prostethic set-up 13 having the following characteristics: standard squaring cast, radiopaque teeth with a possible central prosthetic axis obtained under isoparallel condition and goniometers at 0, simultaneous positioning of the titanium cylinder, i.e. the "fiducial system" and simultaneously graphically marking on the cast 6, i.e. on the portion of the jawbone cast 6 corresponding to the gum of the patient, so called proposed crestal "reference points".

Therefore the dental technician can give the clinical personnel the radiopaque guide 14 in order to verify its stability on the patient.

The mobile radiopaque guide 14 made in this way on the plaster cast 6, provided with holes 141 for each tooth and with the hole of the reference cylinder 142 under isoparallel condition, is tested on the patient mouth i.e. it is put on the gum and jawbone, and after having clinically verifying the stability and after having graphically marked on the plaster cast each crestal "reference point" (RPC), it is worn by the patient when performing the computed tomography examination using one of the available diagnostic techniques such as for example the Computed Axial Tomography, the Cone Beam Volume Tomography, the Magnetic resonance and other ones.

Then, the radiologist gives the dentist a cd-rom upon which digital data of axial scans of the patient are saved, for example with a DICOM3 graphical format. Particularly images can have:
- optimal axial dimensions 512x512 pixels
- optimal distance between axial ones 1mm

The method provides the step realigning the set of base axial images provided by the radiologic study by means of an original, computerized procedure, defined as "semplified realignment function along a single axis" using as reference the radiographic marker incorporated into the guide 14, that is the so called "fiducial system" having known shape and size.

Thus it is possible to obtain a new realigned examination wherein base axial images are exactly perpendicular to marker axes i.e. to the axis of the cylinder 142 and axes of holes 141 of each tooth, previously inserted.

Thus it is possible to go on with the "virtual surgical planning" with a greater accuracy level with respect to a non realigned examination according to the reference axis. The realignment of images of the examination performed by the technician, in order to obtain perpendicular ratio between axial images and prosthetic marker axes, allows the positioning of implant markers and the positioning of the plaster cast 6 of the jawbone on the work platform 5 of the six degrees-of-freedom device to be considerably semplified during the subsequent computerized planning step.

Image realignment software are known but the method provides to use an original software for the automatic realignment of images that is specific for dental prostheses using holes 141 drilled in teeth and the radiopaque cylinder 142 as references.

The programme, differently from known software, performes the realignment with respect to a single axis: considering the fact that the axis of the cylinder 142 and holes 141 drilled in implant teeth are under isoparallel condition, realigned images will result as to be acquired according to a plane perpendicular also to the axis of holes 141.

The use of the step realigning images according to the central axis of the marker, that is the radiopaque cylinder 142, allows the radiologist to acquire images, without forcing the patient to keep a specific position during all the examination: images acquired according to a certain plane will be realigned according to a central axis of the fiducial marker that is the titanium cylinder 142 in order to create a new set of images interpolated with such characteristic i.e. perpendicular to axes of previously inserted markers.

It is possible to go on with the implant dentistry operation in the virtual environment allowing implants to be positioned in ideal positions considering precious information about the prostethic project provided by radiographic masks or guides 14 that are integrated with the diagnostic examination, observing the residual bone anatomy, biomechanical principles regulating the creation of the implant-prosthesis and functional and aesthetical principles.

According to a preferred embodiment data are imported into the planning software for example DENTASCAN or IMPLANT3D (MLSW, La Spezia, Italy), where it will be possible to begin a three-dimensional reconstruction of the bone segment that will be subjected to the implant operation. For example the use of a DICOM displaying software, installed on a standard PC allows digital data of the examination to be 3D displayed in multiplanar mode (MPR), allows the graphic interaction with them and the three-dimensional planning of the prosthetic implant treatment. Moreover it allows anatomical structures that need to be respected to be subjected to volumetric display.

Particularly known planning software are able to construct images lying on other two planes orthogonal to the axial one. The base operation, in a planning software of the Dentascan type, after the CAT acquisition, is to identify a series of points on an axial one by the technician, points allowing the programme to identify a curve following the path of the dental arch. Then the programme calculates sagittal images and the oblique paraxial images orthogonal to such curve such to have a single topographic examination for an implant-prostethic project extended to all the upper and lower maxillary anatomical district.

Particularly the three-dimensional model is represented by:
- axial images, lying on the acquisition plane,
- sagittal or simil-panoramic images obtained by dissecting arches according to curves and projecting such sections on a sagittal plane or on a coronal plane, thus providing information about all the arch,
- oblique or radial paraxial images, upon which measurements will be performed, obtained by interpolation algorithms and orthogonal to the first two series of images.

Known software make this series of images available and provide also tools for measuring, determining the bone consistency and simulating the implant installation.

By processing realigned images it will be possible to overlap in an easier and safer way individual virtual implant markers, exactly corresponding to markers inserted by the technician as a reference inside the radiographic guide 14, under an isoparallel geometrical condition.

Thus it will be possible to accurately orientate within analyzed and selected anatomical structures and to easily find fiducial markers, reformatted under isoparallel conditions which will be constantly visible, measurable and identifiable by means of the interactive and three-dimensional display typical of interactive software, such to have always reference points properly oriented within the three-dimensional space.

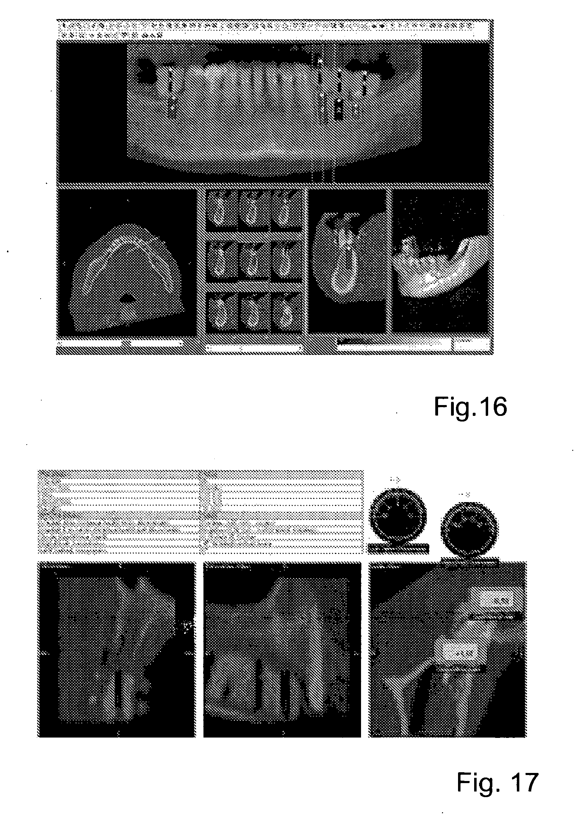

As shown in figure 16, the implant operation is carefully virtually performed allowing implants to be positioned in ideal positions considering precious information provided by radiographic masks 14, while observing both biomechanical principles regulating the implant-prosthesis creation and functional and aesthetical principles.

Once the computer virtual planning step is finished, the software allows a report for the dental technician to be calculated and printed, such as shown in figure 17, with patient data regarding space coordinates of each considered implant indicating values about the linear translation position x, y, z and the angular one θx, θy, θz of each implant which have been calculated with respect to the crestal reference point and to the axis of the prosthetic marker 142, defined by the radiographic guide 14 and which can be perfectly found on the plaster cast 6.

Moreover the software provides also the depth of the hole to be made in the jawbone: the radiographic image shows also soft tissues, i.e. the gum, as a gap in the radiography placed between the bone and the radiopaque guide, therefore during the implant planning the software considers also the gum depth.

Therefore the clinician prints coordinates processed by the software and communicates data to the dental laboratory that has to transform the radiopaque guide 14 into a surgical guide 15, i.e. a guide allowing implants to be optimally positioned on the jawbone.

The dental technician repositions the radiographic guide 14 on the jawbone cast 6 that in turn is put on the platform 5 of the six degrees-of-freedom device of the invention, having means for locking the cast 6 in the desired position.

The dental technician searches for the first-order angular position θx on the axial rotating base through a rapid and simplified mathematical procedure, that is optically assisted by a linear laser pointing device 11. Such action is made by ideally dividing the edentolous portion into three bisecting lines, a front one and two back ones, obtained on the basis of previously marked crestal reference points.

The first-order angular value θx, lying on the base rotating about the x axis is necessary as the starting point for the following adjustments of the position of each implant site.

Such value allows a geometrical relation condition to be achieved between the real, plaster cast and the virtual model, processed by means of the computer, and it exactly corresponds to the alignment of the cross-section re-calculated by the software with respect to the crestal reference point considered on the model.

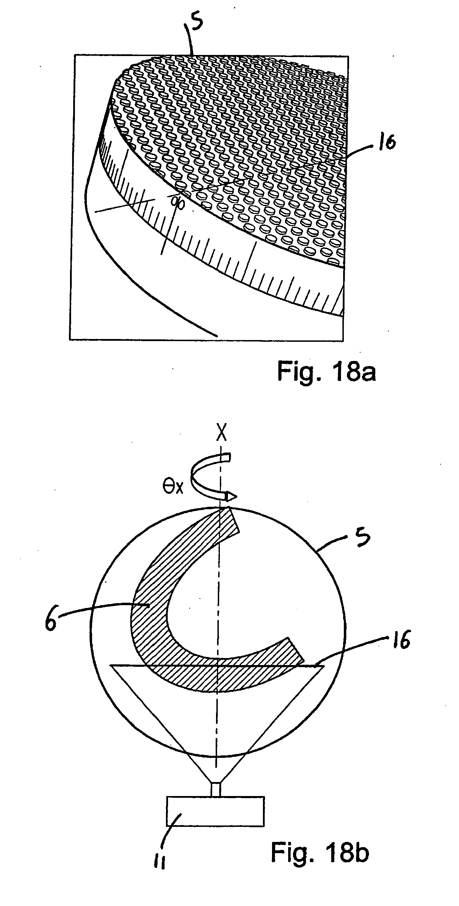

Such as shown in figure 18 the linear laser pointing device 11 traces a straight line on the platform 5 where the jawbone cast 6 rests. Once the work sector has been defined the supporting platform 5 is rotated about the x axis such that crestal reference points fall upon such straight line 16, and then the cross-like movement of the micrometers of the micrometric base 8 is set at zero.

Then the operator, by means also of colour codes, can easily and repeatably adjust the remaining second and third-order angular values θy, θz, arranged on the vestibular-lingual and mesial-distal axis respectively, and the linear translation ones x, y, z of fourth, fifth and sixth-order respectively, necessary for finding the crestal entrance point and the final trajectory of each individual implant on the anatomical cast 6 of the jawbone.

Particularly x, y values are adjusted after having centered and locked the pointing device on the corresponding reference point previously marked at crestal level.

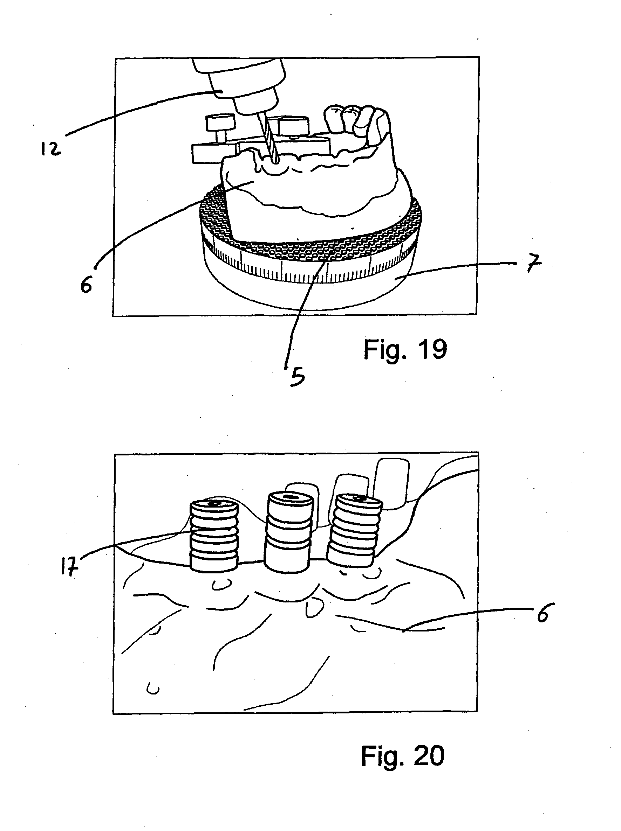

Such as shown in figure 19, once said micrometric adjustments have been made, it is possible to make holes at determined levels and/or to position directional guides 17 in order to register and freeze transferred surgical trajectories, by using the specific function of the vertical arm 3 of the device corresponding to the Z axis.

Such as shown in figure 20 in order to position directional guides or guide cannulas 17 the jawbone cast is drilled by a suitable instrument, moving the drilling instrument 12 along the z axis of the six degrees-of-freddom device , for similarly locking cannulas into the plaster cast 6.

The trajectory is transmitted by using a milling device supported at one end of the arm 3 associated to the vertical column 2 of the device: the milling device has the same diameter of the guide cannula 17 that will be inserted into the radiographic guide 14 for becoming a surgical guide 15.

The length of the milling device for making an hole into the bone having the proper depth will be calculated by the technician considering dimensions of the implant, the depth of the gum and the height of the cannula 17.

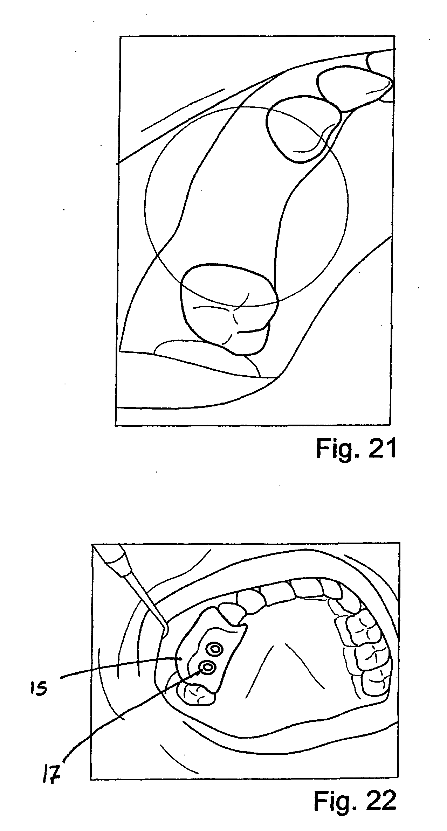

The dental technician gives the surgical guide or mask 15 and the prosthesis to the clinician that can apply the surgical mask 15 complete with cannulas 17 into the oral cavity, such as shown in figure 22.

The clinician will go on with drilling the bone by using a series of sterilizable inserts having different diameters, that can be easily recognized by means of the colour of the positioning key such to reach the final hole with the highest precision and repeatability with respect to the virtual planning.

The operation will end by positioning implants and applying prostheses. On the basis of the method described above it is possible to make a system for making radiographic guides 14 and/or surgical guides 15 and for the guided transfer in the human oral cavity of surgical trajectories planned by computerized three-dimensional diagnostic imaging systems. In addition to means for making a prosthetic set-up and a jawbone cast 6 by acquiring images of the patient for making a radiographic guide 14, the system provides the device described above to be used for making at least an hole 141 under isoparallel condition at the central axis of at least a tooth of the radiographic guide 14 and for incorporating a reference marker 142 having known shape and size made of radiopaque material into the radiographic guide 14 and for graphically marking on the portion of the jawbone cast 6 corresponding to the patient gum, the so called proposed crestal "reference points".

The system provides the use of known means for positioning the radiographic guide 14 into the patient mouth for acquiring images by performing the computerized topographic examination and for performing the implant dentistry operation in a virtual environment for positioning implants in ideal positions on the basis of acquired images such to obtain a report with patient data regarding space coordinates of each considered implant with the indication of values about the linear translation position x, y, z and angular one θx, θy, θz and the depth of the jawbone hole.

According to characteristics of the system of the present invention, the operation planning software works on realigned images, by means of a specific software using the radiographic marker 142 incorporated into the radiographic guide 14 as a reference such that a new set of realigned images is obtained where base axial images are exactly perpendicular to the axis of the reference marker 142 and axes of holes 141 of each tooth, said axes being made under isoparallel conditions.

Once coordinates for each implant have been obtained the system uses the six degrees-of-freddom device, particularly the laser pointing device for the optically-assisted positioning of the jawbone cast 6 on the platform 5 of the six degrees-of-freddom device for making a surgical guide 15 complete with directional cannulas 17. Therefore a surgical guide 15 complete with directional cannulas 17 is made which will be applied into the patient oral cavity for positioning implants and applying prostheses.

The system described above provides an hybrid approach to the implant surgery, partially guided by computerized systems, particularly in the planning step but in the following steps it is autonomous for the clinician and the dental technician, it is semplified and economic, it helps the oral surgical implant treatment, using an original mechanical precision pointing device, by suitably arranged marker objects and by methods for acquiring, reconstructing, processing and showing data, allowing all space information about the position and the trajectory of each individual implant fixture planned by known planning software to be indirectly transferred on anatomical plaster casts of jawbone by the dental equipe. Moreover such method allows precision surgical guides to be easily made, which are directly derived from the plaster cast of jawbones, without using rapid prototyping, reverse engineering and/or cad-cam techniques which are more complex and expensive.

The method and device of the present invention allow the safety level of the surgical operation to be considerably increased causing anatomical structures that need to be respected to be clearly found and preventing them from being penetrated during the operation. The system allows also the accuracy level in positioning implants inside the human body to be increased respecting a predetermined prosthetic project and at the same time in various clinical situations it allows provided anatomical conditions to be exploited at best and thus it allows the invasive aspect of implant dentistry surgical treatments to be considerably reduced, which can be performed under safe conditions, even without opening flaps such as provided by "Flapless" and "Graftless" Minimally Invasive Implant Surgery procedures.

## Claims

1. Method for making radiographic guides (14) and/or surgical guides (15) and for the guided transfer in the human oral cavity of surgical trajectories planned by computerized three-dimensional diagnostic imaging systems comprising the following steps:
- a) the creation of a prosthetic set-up and a jawbone cast (6) by acquiring patient images for making a radiographic guide (14),
- b) the positioning of the radiographic guide (14) into the patient mouth for acquiring images by performing the computerized topographic examination,
- c) the execution of the implant dentistry operation in a virtual environment for positioning implants in positions considered to be the ideal ones on the basis of acquired images,
- d) the creation of a report with patient data regarding space coordinates of each considered implant indicating values about the linear translation position x, y, z the angular one θx, θy, θz and about the depth of the jawbone hole,
- e) the creation of a surgical guide (15) complete with directional cannulas (17) and the prosthesis,
wherein the following steps are comprised:
- f) making at the central axis of at least a tooth of the radiographic guide (14) at least an hole (141) under isoparallel conditions, being said hole (141) passing through the tooth point, i.e. the occlusion surface, up to the surface of the radiopaque guide (14) that will contact the gum, and being said hole (141) made using the characteristics of the six degrees-of-freedom pointing device in a x, y, z cartesian axes system, which device comprises:
- a rigid base (1) for supporting the working surface
- a supporting column (2) perpendicular to said base (1),
- an arm (3) projecting from the column (2) with means (4) being provided at the free end thereof for removably fastening surgical instruments
- a platform (5) upon which the jawbone cast (6) can be put and secured, by suitable means,
- means for adjusting the distance between the platform (5) and the arm (3) along the vertical z axis , means for linearly moving the platform (5) along the x, y axes and means for angularly moving θx, θy, θz said platform (5)
- a pointing laser module (11) in order to have an optically-assisted positioning of the cast (6) on the platform (5), particularly the pointing laser (11) is used for quickly and safely defining the first order angular value θx,
- g) incorporating into the radiographic guide (14) a reference marker (142) of known shape and size made of radiopaque material,
- h) graphically marking on the part of the jawbone cast (6) corresponding to the patient gum, so called proposed crestal "reference points",
- i) realigning the set of base axial images provided by the computerized tomographic examination by using as reference the radiographic marker (142) incorporated into the radiographic guide (14) such to obtain a new set of realigned images wherein base axial images are exactly perpendicular to the axis of the reference marker (142) and axes of holes (141) of each tooth, said axes being made under isoparallel conditions,
- l) Positioning the jawbone cast (6) in an optical assisted way on the platform (5) of the six degrees-of-freedom device for making a surgical guide (15) complete with directional cannulas (17).

2. Method according to claim 1 **characterized in that** holes (141) under isoparallel condition are made by placing and locking the jawbone cast (6) complete with the radiopaque guide (14) on the platform (5) of the six degrees-of-freedom device and said holes (141) are made by setting at zero angular values θx, θy, θz by control means of the goniometric base (7) and by translating the platform (5) with the cast (6) along the x, y axes such to make a central hole (141) on the occlusion surface of each tooth, moving the arm (3) supporting the rotating instrument (12), particularly a drill (12), along the z axis of the reference cartesian system.

3. Method according to one or more of the preceding claims, **characterized in that** the hole (141) has a diameter of 2 mm.

4. Method according to one or more of the preceding claims **characterized in that** the reference marker is a titanium cylinder having a diameter of 2 mm and an height of 10 mm.

5. Method according to one or more of the preceding claims **characterized in that** the hole where the marker is applied, particularly the radiopaque cylinder (142) is made by placing and locking the jawbone cast (6) complete with the radiopaque guide (14) on the platform (5) of the six degrees-of-freedom device and by setting at zero angular values θx, θy, θz by control means of the goniometric base (7), by moving the arm (3) supporting the rotating instrument (12), particularly a drill (12), along the z axis of the reference cartesian system such that the central axis of the marker is under isoparallel condition with the other holes (141) of the radiopaque guide (14).

6. Method according to one or more of the preceding claims **characterized in that** the reference marker (142) is applied into the radiopaque guide (14) in a firmly position, easy to be found within an area of the radiopaque guide (14) where there are no signal noises during the image acquisition, particularly considering the final position of the prosthesis into the patient mouth, the marker (142) is arranged away from occlusions, bridges or the like made of metal, i.e parts that can interfere with the radiographic signal during imaging necessary to plan the operation.

7. Method according to one or more of the preceding claims **characterized in that** the image realignment provides to use an original software for the automatic realignment of images that is specific for dental prostheses using the axis of holes (141) drilled in teeth and/or the axis of the radiopaque marker cylinder (142) as reference, particularly the software, considering that the axis of the cylinder (142) and holes (141) made into teeth of the radiopaque guide (14) are under isoparallel condition, performes the realignment with respect to a single axis and realigned images will result as to be acquired according to a plane perpendicular also to the axis of holes (141) such that the positioning of implant markers during the following computerized planning step and the positioning of the jawbone plaster cast (6) on the platform (5) of the six degrees-of-freedom device are considerably simplified.

8. Method according to one or more of the preceding claims **characterized in that** the implant planning software makes a report with patient data regarding the depth of the hole to be made on the jawbone and space coordinates of each considered implant, indicating values about the linear translation position x, y, z and the angular one θx, θy, θz of each implant which have been calculated with respect to the crestal reference point and to the axis of the prosthetic marker (142), defined by the radiographic guide (14) and which can be perfectly found on the plaster cast (6).

9. Method according to one or more of the preceding claims **characterized in that** the proper positioning of the jawbone cast (6) on the platform (5) of the six degrees-of-freedom device for making the surgical guide (15) provides to search for the first order angular position θx, lying on the plane rotating about the x axis, by means of a laser pointing module (11) such to have a starting point for the following space adjustments of the position of each implant site.

10. Method according to one or more of the preceding claims **characterized in that** the search for the first-order angular value θx provides the edentolous portion of the jawbone cast (6) to be divided into three bisecting lines, a front one and two back ones, obtained on the basis of previously marked crestal reference points such to obtain a geometrical relation condition between the real cast (6) and the virtual model, processed by means of the computer.

11. Method according to one or more of the preceding claims **characterized in that** once the work sector has been defined the supporting platform (5) is rotated about the x axis and the cross-like movement of the micrometers of the micrometric base (8) is set at zero.

12. Method according to one or more of the preceding claims **characterized in that** it provides, by means also of colour codes, the remaining second and third-order angular values θy, θz, arranged on the vestibular-lingual and mesial-distal axis respectively, and the linear translation ones x, y, z of fourth, fifth and sixth-order respectively, to be subsequently easily and repeatably adjusted, which are necessary for finding the crestal entrance point and the final trajectory of each individual implant on the anatomical cast (6) of the jawbone.

13. Method according to one or more of the preceding claims **characterized in that** x, y linear values are adjusted after having centered and locked the pointing device on the corrisponding reference point previously marked at crestal level.

14. Method according to one or more of the preceding claims **characterized in that** once said micrometric and angular adjustments have been made, holes at determined levels are made and/or directional cannulas (17) are positioned in order to transfer surgical trajectories, by using the specific movement function of the vertical arm (3) of the device corresponding to the Z axis and by moving the drilling instrument (12) along the z axis of the six degrees-of-freedom device, for locking cannulas (17) within the plaster cast (6).

15. Method according to one or more of the preceding claims **characterized in that** in order to make into the bone an hole having a depth planned by the implant planning software the selection of dimensions of the drilling instrument, particularly the length of the milling device, is calculated by the technician considering dimensions of the implant, the depth of the gum and the height of the cannula (17).

16. System for making radiographic guides (14) and/or surgical guides (15) and for the guided transfer in the human oral cavity of surgical trajectories planned by computerized three-dimensional diagnostic imaging systems said system comprising :
- means for creating a prosthetic set-up and a jawbone cast (6) by acquiring patient images for making a radiographic guide (14),
- means for making at the central axis of at least a tooth of the radiographic guide (14) at least an hole (141) under isoparallel conditions, being said hole (141) passing through the tooth point, i.e. the occlusion surface, up to the surface of the radiopaque guide (14) that will contact the gum,
- means for incorporating into the radiographic guide (14) a reference marker (142) of known shape and size made of radiopaque material,
- means for graphically marking on the part of the jawbone cast (6) corresponding to the patient gum, so called proposed crestal "reference points",
- means for positioning the radiographic guide (14) into the patient mouth for acquiring images by performing the computerized topographic examination,
- means for performing the implant dentistry operation in a virtual environment for positioning implants in positions considered to be the ideal ones on the basis of acquired images,
- means for realigning the set of base axial images provided by the computerized tomographic examination by using as reference the radiographic marker (142) incorporated into the radiographic guide (14) such to obtain a new set of realigned images wherein base axial images are exactly perpendicular to the axis of the reference marker (142) and axes of holes (141) of each tooth, said axes being made under isoparallel conditions,
- means for creating a report with patient data regarding space coordinates of each considered implant indicating values about the linear translation position x, y, z, the angular one θx, θy, θz and about the depth of the jawbone hole,
- means for positioning the jawbone cast (6) in an optical assisted way with a pointing laser module (11) on the platform (5) of the six degrees-of-freedom device for making a surgical guide (15) complete with directional cannulas (17),
- means for making a surgical guide (15) complete with directional cannulas (17) and the prosthesis,
- means for applying the surgical guide (15) into the oral cavity of the patient
- means for positioning implants and for applying prostheses.

17. Six degrees-of-freedom pointing device in a x, y, z cartesian axes system for performing the method for making radiographic guides (14) and/or surgical guides (15) according to one or more of the preceding claims 1 to 15, which device comprises:
- a rigid base (1) for supporting the working surface
- a supporting column (2) perpendicular to said base (1),
- an arm (3) projecting from the column (2) with means (4) being provided at the free end thereof for removably fastening surgical instruments
- a platform (5) upon which the jawbone cast (6) can be put and secured, by suitable means,
- means for adjusting the distance between the platform (5) and the arm (3) along the vertical z axis, means for linearly moving the platform (5) along the x, y axes and means for angularly moving θx, θy, θz said platform (5)- **characterized in that** said device is provided with a pointing laser module (11) in order to have an optically-assisted positioning of the cast (6) on the platform (5), particularly the printing laser (11) is used for quickly and safely defining the first order angular value θx.

## Patentansprüche

1. Verfahren zum Herstellen von röntgenografischen Führungsschablonen (14) und/oder chirurgischen Führungsschablonen (15) und für die geführte Übertragung in die menschliche Mundhöhle von chirurgischen Bahnkurven, geplant durch computerisierte, dreidimensionale, diagnostische Bildgebungssysteme, umfassend die folgenden Schritte:
- a) die Erstellung einer prothetischen Einrichtung und eines Kieferknochenabgusses (6) durch Aufnehmen von Patientenbildern zum Herstellen von röntgenografischen Führungsschablonen (14),
- b) das Positionieren der röntgenografischen Führungsschablone (14) in den Patientenmund zum Aufnehmen von Bildern durch Durchführen der computerisierten topografischen Untersuchung,
- c) die Ausführung der zahnmedizinischen Implantationsoperation in einer virtuellen Umgebung zum Positionieren von Implantaten in Positionen, welche auf der Basis der aufgenommenen Bilder als ideal betrachtet werden,
- d) die Erstellung eines Berichts mit Patientendaten, betreffend Raumkoordinaten jedes in Erwägung gezogenen Implantats, welcher Werte von der Position der linearen Translation x, y, z, des Winkels θx, θy, θz und von der Tiefe des Kieferknochenlochs angibt,
- e) die Erstellung einer chirurgischen Führungsschablone (15) komplett mit Richtungsröhrchen (17) und der Prothese, die die folgenden Schritte umfasst:
- f) Herstellen von mindestens einem Loch (141) an der zentralen Achse von mindestens einem Zahn der röntgenografischen Führungsschablone (14) unter isoparallelen Bedingungen, wobei das genannte Loch (141) durch den Zahnpunkt, d.h. die Füllungsoberfläche, bis zur Oberfläche der strahlungsundurchlässigen Führungsschablone (14) verläuft, welche das Zahnfleisch berühren wird und wobei das genannte Loch (141) die typischen Eigenschaften der sechs Freiheitsgrade aufweisenden Zeigevorrichtung in einem x, y, z kartesischen Koordinatensystem nutzen soll, wobei die Vorrichtung umfasst:
- eine feste Basis (1) zum Tragen der Arbeitsoberfläche
- eine tragende Säule (2), senkrecht zur genannten Basis (1),
- einen Arm (3), welcher aus der Säule (2) herausragt, mit Mitteln (4), welche zum lösbaren Befestigen chirurgischer Instrumente am freien Ende davon vorgesehen sind,
- eine Plattform (5), auf der der Kieferkochenabguss (6) gestellt und durch geeignete Mittel gesichert werden kann,
- Mittel zum Anpassen des Abstandes zwischen der Plattform (5) und dem Arm (3) entlang der vertikalen z-Achse, Mittel zum linearen Bewegen der Plattform (5) entlang der x-, y-Achsen und Mittel zur Winkelbewegung θx, θy, θz der genannten Plattform (5)
- ein Zeigelasermodul (11), um ein optisch unterstütztes Positionieren des Abgusses auf der Plattform (5) zu haben, wobei insbesondere der Zeigelaser (11) zum schnellen und sicheren Bestimmen des Winkelwerts erster Ordnung θx dient,
- g) Aufnehmen eines Referenzmarkers (142) von bekannter Form und Größe, aus strahlungsundurchlässigem Material in die röntgenografische Führungsschablone (14)
- h) grafisches Markieren auf dem Teil des Kieferknochenabgusses (6), welcher dem Patientenzahnfleisch entspricht, den sogenannten empfohlenen krestalen "Referenzpunkten",
- i) Neuausrichten des Satzes von Basisaxialbildern, bereitgestellt durch die computertomografische Untersuchung unter Verwendung des röntgenografischen Markers (142) als Referenz, der in die Führungsschablone (14) aufgenommen ist, um so einen neuen Satz an neu ausgerichteten Bildern zu erhalten, worin die Basisaxialbilder genau senkrecht zur Achse des Referenzmarkers (142) und den Achsen der Löcher (141) jedes Zahns sind, wobei genannte Achsen unter isoparallelen Bedingungen hergestellt sind,
- I) Positionieren des Kieferknochenabgusses (6) auf optisch unterstützte Art auf der Plattform (5) der sechs Freiheitsgrade aufweisenden Vorrichtung zum Herstellen einer chirurgischen Führungsschablone (15) komplett mit Richtungsröhrchen (17).

2. Verfahren gemäß Anspruch 1, **dadurch gekennzeichnet, dass** Löcher (141) unter isoparallelen Bedingungen durch Platzieren und Verriegeln des Kieferknochenabgusses (6), komplett mit der strahlungsundurchlässigen Führungsschablone (14) auf der Plattform (5) der sechs Freiheitsgrade aufweisenden Vorrichtung hergestellt werden und die genannten Löcher (141) durch Nullsetzen der Winkelwerte θx, θy, θz mittels Steuermitteln der Winkelmessbasis (7) und durch Verschieben der Plattform (5) mit dem Abguss (6) entlang der x-, y-Achsen hergestellt sind, um so ein zentrales Loch (141) auf der Füllungsoberfläche von jedem Zahn herzustellen, wobei der Arm (3), welcher das rotierende Instrument (12), insbesondere einen Bohrer (12), trägt, entlang der z-Achse des kartesischen Koordinatensystems bewegt wird.

3. Verfahren gemäß einem oder mehreren der vorhergehenden Ansprüche, **dadurch gekennzeichnet, dass** das Loch (141) einen Durchmesser von 2 mm hat.

4. Verfahren gemäß einem oder mehreren der vorhergehenden Ansprüche, **dadurch gekennzeichnet, dass** der Referenzmarker ein Titanzylinder ist, welcher einen Durchmesser von 2 mm und eine Höhe von 10 mm hat.

5. Verfahren gemäß einem oder mehreren der vorhergehenden Ansprüche, **dadurch gekennzeichnet, dass** das Loch, wo der Marker angebracht wird, insbesondere der strahlungsundurchlässige Zylinder (142), hergestellt wird durch Platzieren und Verriegeln des Kieferknochenabgusses (6), komplett mit der strahlungsundurchlässigen Führungsschablone (14) auf der Plattform (5) der sechs Freiheitsgrade aufweisenden Vorrichtung, und durch Nullsetzen der Winkelwerte θx, θy, θz mittels Steuermitteln der Winkelmessbasis (7), durch Bewegen des Arms (3), der das rotierende Instrument (12), insbesondere einen Bohrer (12), trägt, entlang der z-Achse des kartesischen Koordinatensystems, so dass die zentrale Achse des Markers unter isoparallelen Bedingungen mit den anderen Löchern (141) der strahlungsundurchlässigen Führungsschablode (14) ist.

6. Verfahren gemäß einem oder mehreren der vorhergehenden Ansprüche, **dadurch gekennzeichnet, dass** der Referenzmarker (142) in der strahlungsundurchlässigen Führungsschablone (14) in einer festen Position angebracht ist, welche leicht in einem Bereich der strahlungsundurchlässigen Führungsschablone (14) zu finden ist, wo es während der Bildaufnahme kein Signalrauschen gibt, insbesondere unter Berücksichtigung der endgültigen Position der Prothese im Patientenmund wird der Marker (142) außerhalb von aus Metall bestehenden Füllungen, Brücken oder Ähnlichem, d.h. von Teilen, die das röntgenografische Signal während der zur Planung der Operation nötigen Bildaufnahme stören können, angeordnet.

7. Verfahren nach einem oder mehreren der vorhergehenden Ansprüche, **dadurch gekennzeichnet, dass** die Bildneuausrichtung eine ursprünglich für die automatische Neuausrichtung von Bildern vorgesehene Software nutzt, die spezifisch für dentale Prothesen ist, welche die Achse von in Zähne gebohrten Löchern (141) und/oder die Achse des strahlungsundurchlässigen Markerzylinders (142) als Referenz nutzt, insbesondere führt die Software unter Berücksichtigung, dass die Achse des Zylinders (142) und der Löcher (141) unter isoparallelen Bedingungen in den Zähnen der strahlungsundurchlässigen Führungsschablone (14) hergestellt sind, die Neuausrichtung in Bezug auf eine Einzelachse durch und die neu ausgerichteten Bilder ergeben sich als seien sie gemäß einer auch zur Achse der Löcher (141) senkrechten Ebene aufgenommen, so dass das Positionieren von Implantatmarkern während des folgenden computerisierten Planungsschritts und das Positionieren des Kieferknochengipssabgusses (6) auf der Plattform (5) der sechs Freiheitsgrade aufweisenden Vorrichtung erheblich vereinfacht wird.

8. Verfahren gemäß einem oder mehreren der vorhergehenden Ansprüche, **dadurch gekennzeichnet, dass** die Implantatplanungssoftware einen Bericht mit Patientendaten herstellt, betreffend die Tiefe des im Kieferknochen herzustellenden Lochs und die Raumkoordinaten jedes in Erwägung gezogenen Implantats, welcher Werte von der Position der linearen Translation x, y, z und des Winkels θx, θy, θz jedes Implantats angibt, welche bezüglich des krestalen Referenzpunktes und der Achse des prothetischen Markers (142) berechnet worden sind, der durch die röntgenografische Führungsschablone (14) bestimmt und auf dem Gipsabguss (6) hervorragend zu finden ist.

9. Verfahren gemäß einem oder mehreren der vorhergehenden Ansprüche, **dadurch gekennzeichnet, dass** das einwandfreie Positionieren des Kieferknochenabgusses (6) auf der Plattform (5) der sechs Freiheitsgrade aufweisenden Vorrichtung zum Herstellen der chirurgischen Führungsschablone (15) vorsieht, nach der Winkelposition erster Ordnung θx, welche auf der um die x-Achse rotierenden Ebene liegt, mittels eines Zeigelasermoduls (11) zu suchen, so dass ein Startpunkt für die folgende räumliche Anpassung der Position jeder Implantatstelle vorliegt.

10. Verfahren gemäß einem oder mehreren der vorhergehenden Ansprüche, **dadurch gekennzeichnet, dass** die Suche nach einem Winkelwert erster Ordnung θx vorsieht, dass das zahnlose Stück des Kieferknochenabgusses (6) in drei halbierende Linien unterteilt ist, eine vordere und zwei hintere, erhalten auf der Basis der zuvor markierten krestalen Referenzpunkte, um so eine Bedingung für die geometrische Beziehung zwischen dem realen Abguss (6) und dem virtuellen Model zu erhalten durch Berechnung des Computers.

11. Verfahren gemäß einem oder mehreren der vorhergehenden Ansprüche, **dadurch gekennzeichnet, dass**, wenn der Arbeitssektor definiert worden ist, die tragende Plattform (5) um die x-Achse gedreht wird und die kreuzförmige Bewegung der Mikrometer der mikrometrischen Basis (8) auf Null gesetzt ist.

12. Verfahren gemäß einem oder mehreren der vorhergehenden Ansprüche, **dadurch gekennzeichnet, dass** es, auch durch Farbkodiermittel, vorsieht, dass die Werte der verbleibenden Winkel zweiter und dritter Ordnung θy, θz, angeordnet auf der vestibulärlingualen und entsprechend der mesial-distalen Achse, und die Werte x, y, z der entsprechenden linearen Translation vierter, fünfter und sechster Ordnung nacheinander einfach und wiederholbar eingestellt werden, welche zum Finden des krestalen Eingangspunktes und der endgültigen Bahnkurve eines jeden individuellen Implantats auf dem anatomischen Abguss (6) des Kieferknochens notwendig sind.

13. Verfahren gemäß einem oder mehreren der vorhergehenden Ansprüche, **dadurch gekennzeichnet, dass** die linearen x, y Werte angepasst werden, nachdem die Zeigevorrichtung auf dem entsprechenden Referenzpunkt zentriert und verriegelt worden ist, welcher zuvor auf krestalem Niveau markiert wurde.

14. Verfahren gemäß einem oder mehreren der vorhergehenden Ansprüche, **dadurch gekennzeichnet, dass**, wenn genannte mikrometrische und Winkelanpassungen gemacht worden sind, auf festgelegten Niveaus Löcher erzeugt werden und/oder Richtungsröhrchen (17) positioniert werden zwecks Übertragen der chirurgischen Bahnkurven durch Verwenden der spezifischen, zur z-Achse gehörigen Bewegungsfunktion des vertikalen Arms (3) der Vorrichtung und durch Bewegen des Bohrinstruments (12) entlang der z-Achse der sechs Freiheitsgrade aufweisenden Vorrichtung, um Röhrchen (17) innerhalb des Gipsabgusses (6) zu verriegeln.

15. Verfahren gemäß einem oder mehreren der vorhergehenden Ansprüche, **dadurch gekennzeichnet, dass**, um in den Knochen ein Loch zu machen, welches die durch die Implantatplanungssoftware vorgesehene Tiefe aufweist, die Auswahl der Abmessungen des Bohrinstruments, insbesondere die Länge der fräsenden Vorrichtung, durch den Techniker unter Berücksichtigung der Abmessungen des Implantats, der Tiefe des Zahnfleisches und der Höhe der Röhrchen (17) berechnet wird.

16. System zum Herstellen von röntgenografischen Führungsschablonen (14) und/oder chirurgischen Führungsschablonen (15) und für die geführte Übertragung in die menschliche Mundhöhle von chirurgischen Bahnkurven, geplant durch computerisierte dreidimensionale, diagnostische Bildgebungssysteme, wobei das genannte System umfasst:
- Mittel zum Erstellen einer prothetischen Einrichtung und eines Kieferknochenabgusses (6) durch Aufnehmen von Patientenbildern zum Herstellen von röntgenografischen Führungsschablonen (14),
- Mittel zum Herstellen von mindestens einem Loch (141) an der zentralen Achse von mindestens einem Zahn der röntgenografischen Führungsschablone (14) unter isoparallelen Bedingungen, wobei genanntes Loch (141) durch den Zahnpunkt, d.h. die Füllungsoberfläche, bis zur Oberfläche der strahlungsundurchlässigen Führungsschablone (14) verläuft, welche das Zahnfleisch berühren wird,
- Mittel zum Aufnehmen eines Referenzmarkers (142) von bekannter Form und Größe, aus strahlungsundurchlässigem Material, in die röntgenografische Führungsschablone (14),
- Mittel zum grafischen Markieren auf dem Teil des Kieferknochenabgusses (6), welcher dem Patientenzahnfleisch entspricht, so genannte empfohlene krestale "Referenzpunkte",
- Mittel zum Positionieren der röntgenografischen Führungsschablone (14) in den Patientenmund zum Aufnehmen von Bildern durch Durchführen der computertopografischen Untersuchung,
- Mittel zum Durchführen der zahnmedizinischen Implantationsoperation in einer virtuellen Umgebung zum Positionieren von Implantaten in Positionen, welche auf Basis der aufgenommenen Bilder als ideal betrachtet werden,
- Mittel zum Neuausrichten des Satzes an Basisaxialbildern, bereitgestellt durch die computertomografische Untersuchung, unter Verwendung des röntgenografischen Markers (142) als Referenz, der in die Führungsschablone (14) aufgenommen ist, um so einen neuen Satz an neu ausgerichteten Bildern zu erhalten, worin die Basisaxialbilder genau senkrecht zur Achse des Referenzmarkers (142) und den Achsen der Löcher (141) jedes Zahns sind, wobei genannte Achsen unter isoparallelen Bedingungen hergestellt sind,
- Mittel zum Erstellen eines Berichts mit Patientendaten, betreffend Raumkoordinaten jedes in Erwägung gezogenen Implantats, welcher Werte von der Position der linearen Translation x, y, z, des Winkels θx, θy, θz und von der Tiefe des Kieferknochenlochs angibt,
- Mittel zum Positionieren des Kieferknochenabgusses (6) auf optisch unterstützte Art mit einem Zeigelasermodul (11) auf der Plattform (5) der sechs Freiheitsgrade aufweisenden Vorrichtung zum Herstellen einer chirurgischen Führungsschablone (15) komplett mit Richtungsröhrchen (17),
- Mittel zum Herstellen einer chirurgischen Führungsschablone (15) komplett mit Richtungsröhrchen (17) und den Prothesen,
- Mittel zum Anbringen der chirurgischen Führungsschablone (15) in der Mundhöhle des Patienten,
- Mittel zum Positionieren von Implantaten und zum Anbringen von Prothesen.

17. Sechs Freiheitsgrade aufweisende Zeigevorrichtung in einem x, y, z kartesischen Koordinatensystem zum Durchführen des Verfahrens zum Herstellen von röntgenografischen Führungsschablonen (14) und/oder chirurgischen Führungsschablonen (15) gemäß einem oder mehreren der vorhergehenden Ansprüche 1 bis 15, wobei die Vorrichtung umfasst:
- eine feste Basis (1) zum Tragen der Arbeitsoberfläche,
- eine tragende Säule (2), senkrecht zur genannten Basis (1),
- einen Arm (3), welcher aus der Säule (2) herausragt, mit Mitteln (4), welche zum lösbaren Befestigen chirurgischer Instrumente am freien Ende davon vorgesehen sind,
- eine Plattform (5), auf der der Kieferknochenabguss (6) gestellt und durch geeignete Mittel gesichert werden kann,
- Mittel zum Anpassen des Abstandes zwischen der Plattform (5) und dem Arm (3) entlang der vertikalen z-Achse, Mittel zum linearen Bewegen der Plattform (5) entlang der x-, y-Achsen und Mittel zur Winkelbewegung θx, θ, θz der genannten Plattform (5),
**dadurch gekennzeichnet, dass** die genannte Vorrichtung ein Zeigelasermodul (11) aufweist, um ein optisch unterstützes Positionieren des Abgusses (6) auf der Plattform (5) zu haben, wobei insbesondere der Zeigelaser (11) zur schnellen und sicheren Bestimmung des Winkelwertes erster Ordnung θx dient.

## Revendications

1. Procédé de fabrication de guides radiographiques (14) et/ou de guides chirurgicaux (15) et pour le transfert guidé dans la cavité orale humaine de trajectoires chirurgicales planifiées par des systèmes d'imagerie de diagnostic tridimensionnels informatisés, comprenant les étapes suivantes:
- a) la création d'une mise en place prothétique et d'un moulage de mâchoire (6) par l'acquisition d'images du patient pour réaliser un guide radiographique (14),
- b) le positionnement du guide radiographique (14) dans la bouche du patient pour acquérir des images en exécutant l'examen topographique informatisé,
- c) l'exécution de l'opération de dentisterie d'implants dans un environnement virtuel pour le positionnement d'implants dans des positions considérées comme étant les positions idéales sur la base des images acquises,
- d) la création d'un rapport avec les données du patient se rapportant aux coordonnées d'espace de chaque implant considéré indiquant des valeurs se rapportant à la position de translation linéaire x, y, z, la position angulaire θx, θy, θz et la profondeur du trou de mâchoire,
- e) la création d'un guide chirurgical (15) complet avec les canules directionnelles (17) et la prothèse,
dans lequel les étapes suivantes sont comprises:
- f) réaliser à l'axe central d'au moins une dent du guide radiographique (14) au moins un trou (141) sous des conditions isoparallèles, étant ledit trou (141) passant à travers la pointe de la dent, c'est-à-dire la surface d'occlusion, jusqu'à la surface du guide radiopaque (14) qui viendra en contact avec la gencive, et étant ledit trou (141) réalisé en utilisant les caractéristiques du dispositif de pointage à six degrés de liberté dans un système d'axes cartésiens x, y, z, ledit dispositif comprend:
- une base rigide (1) pour supporter la surface de travail
- une colonne de support (2) perpendiculaire à ladite base (1),
- un bras (3) faisant saillie de la colonne (2) avec des moyens (4) réalisés à son extrémité libre pour fixer amoviblement les instruments chirurgicaux
- une plate-forme (5) sur laquelle le moulage de mâchoire (6) peut être placé et fixé, par des moyens appropriés,
- des moyens pour régler la distance entre la plate-forme (5) et le bras (3) le long de l'axe vertical z, des moyens pour déplacer linéairement la plate-forme (5) le long des axes x, y et des moyens pour déplacer angulairement θx, θy, θz ladite plate-forme (5)
- un module laser de pointage (11) pour avoir un positionnement optiquement assisté du moulage (6) sur la plate-forme (5), particulièrement le laser de pointage (11) est utilisé pour définir rapidement et d'une manière sûre la valeur angulaire de premier ordre θx,
- g) incorporer dans le guide radiographique (14) un marqueur de référence (142) d'une forme et taille connues réalisé en un matériau radiopaque,
- h) marquer graphiquement sur la partie du moulage de mâchoire (6) correspondant à la gencive du patient des soi-disant "points de référence" crestaux proposés,
- i) réaligner l'ensemble des images axiales de base fournies par l'examen tomographique informatisé en utilisant comme référence le marqueur radiographique (142) incorporé dans le guide radiographique (14) de manière à obtenir un nouveau ensemble d'images réalignées, où les images axiales de base sont exactement perpendiculaires à l'axe du marqueur de référence (142) et aux axes des trous (141) de chaque dent, lesdits axes étant réalisés sous des conditions isoparallèles,
- 1) positionner le moulage de mâchoire (6) d'une manière optiquement assistée sur la plate-forme (5) du dispositif à six degrés de liberté pour réaliser un guide chirurgical (15) complet avec des canules directionnelles (17).

2. Procédé selon la revendication 1, **caractérisé en ce que** les trous (141) sous condition isoparallèle sont réalisés en plaçant et en verrouillant le moulage de mâchoire (6) complet avec le guide radiopaque (14) sur la plate-forme (5) du dispositif à six degrés de liberté, et lesdits trous (141) sont réalisés par l'établissement aux valeurs angulaires zéro θx, θy, θz par des moyens de commande de la base goniométrique (7) et par la translation de la plate-forme (5) avec le moulage (6) le long des axes x, y de façon à réaliser un trou central (141) sur la surface d'occlusion de chaque dent, déplacer le bras (3) supportant l'instrument de rotation (12), particulièrement un foret (12), le long de l'axe x du système cartésien de référence.

3. Procédé selon une ou plusieurs des revendications précédentes, **caractérisé en ce que** le trou (141) a un diamètre de 2 mm.

4. Procédé selon l'une ou plusieurs des revendications précédentes, **caractérisé en ce que** le marqueur de référence est un cylindre en titane d'un diamètre de 2 mm et d'une hauteur de 10 mm.

5. Procédé selon l'une ou plusieurs des revendications précédentes, **caractérisé en ce que** le trou ou le marqueur est appliqué, particulièrement le cylindre radiopaque (142), est réalisé en plaçant et en verrouillant le moulage de mâchoire (6) complet avec le guide radiopaque (14) sur la plate-forme (5) du dispositif à six degrés de liberté et en réglant à des valeurs angulaires zéro θx, θy, θz par des moyens de commande de la base goniométrique (7), en déplaçant le bras (3) supportant l'instrument de rotation (12), particulièrement un foret (12), le long de l'axe z du système cartésien de référence de façon que l'axe central du marqueur soit sous condition isoparallèle avec les autres trous (141) du guide radiopaque (14).

6. Procédé selon l'une ou plusieurs des revendications précédentes, **caractérisé en ce que** le marqueur de référence (142) est appliqué dans le guide radiopaque (14) dans une position solide, facile à trouver dans une zone du guide radiopaque (14) dans laquelle il n'y a pas de bruits de signaux durant l'acquisition des images, en considérant particulièrement la position finale de la prothèse dans la bouche du patient, le marqueur (142) est agencé au loin des occlusions, bridges ou analogue réalisés en métal, c'est-à-dire des parties qui peuvent interférer avec le signal radiographique durant l'imagerie nécessaire pour planifier l'opération.

7. Procédé selon l'une ou plusieurs des revendications précédentes, **caractérisé en ce que** le réalignement de l'image permet d'utiliser un logiciel initial pour le réalignement automatique des images qui est spécifique à des prothèses dentaires utilisant l'axe des trous (141) forés dans des dents et/ou l'axe du cylindre de marqueur radiopaque (142) comme référence, particulièrement le logiciel, considérant que l'axe du cylindre (142) et des trous (141) ménagés dans les dents du guide radiopaque (14) sont sous une condition isoparallèle, exécute le réalignement par rapport à un seul axe et des images réalignées résulteront comme étant acquises en accord avec un plan également perpendiculaire à l'axe des trous (141) de sorte que le positionnement des marqueurs d'implants durant l'étape de planification informatisée suivante et le positionnement du moulage de mâchoire en plâtre (6) sur la plate-forme (5) du dispositif à six degrés de liberté sont considérablement simplifiés.

8. Procédé selon l'une ou plusieurs des revendications précédentes, **caractérisé en ce que** le logiciel de planification d'implant établit un rapport avec les données du patient se rapportant à la profondeur du trou à réaliser dans la mâchoire et à des coordonnées d'espace de chaque implant considéré, indiquant des valeurs se rapportant à la position de translation linéaire x, y, z et la position angulaire θx, θy, θz de chaque implant qui ont été calculées par rapport au point de référence crestal et à l'axe du marqueur prothétique (142), défini par le guide radiographique (14) et qui peuvent être parfaitement trouvées sur le moulage en plâtre (6).

9. Procédé selon l'une ou plusieurs des revendications précédentes, **caractérisé en ce que** le positionnement correct du moulage de mâchoire (6) sur la plate-forme (5) du dispositif à six degrés de liberté pour réaliser le guide chirurgical (15) permet de chercher la position angulaire de premier ordre θx, située sur le plan tournant autour de l'axe x, au moyen d'un module de pointage laser (11) de manière à avoir un point de départ pour les ajustements d'espace suivants de la position de chaque site d'implant.

10. Procédé selon l'une ou plusieurs des revendications précédentes, **caractérisé en ce que** la recherche de la valeur angulaire de premier ordre θx fournit la portion édentée du moulage de mâchoire (6) à diviser en trois lignes bissectrices, une avant et deux arrière, obtenues sur la base de points de référence cristaux marqués préalablement de manière à obtenir une condition de relation géométrique entre le moulage réel (6) et le modèle virtuel, traité au moyen de l'ordinateur.

11. Procédé selon l'une ou plusieurs des revendications précédentes, **caractérisé en ce que** lorsque le secteur de travail a été défini, la plate-forme de support (5) est amenée à tourner autour de l'axe x, et le mouvement en forme de croix des micromètres de la base micrométrique (8) est réglé à zéro.

12. Procédé selon l'une ou plusieurs des revendications précédentes, **caractérisé en ce qu'**il fournit, également par des codes couleur, les valeurs angulaires restantes de deuxième et troisième ordre θy, θz, agencées sur l'axe vestibulaire-lingual et mésial-distal respectivement, et les valeurs de translation linéaire x, y, z de quatrième, cinquième et sixième ordre respectivement, pour être ajustées ensuite facilement et de manière à pouvoir être répétées, qui sont nécessaires pour trouver le point d'entrée crestal et la trajectoire finale de chaque implant individuel sur le moulage anatomique (6) de la mâchoire.

13. Procédé selon l'une ou plusieurs des revendications précédentes, **caractérisé en ce que** les valeurs linéaires x, y sont ajustées après avoir centré et verrouillé le dispositif de pointage sur le point de référence correspondant marqué préalablement au niveau crestal.

14. Procédé selon l'une ou plusieurs des revendications précédentes, **caractérisé en ce que** lorsque lesdits ajustements micrométriques et angulaires ont été faits, des trous à des niveaux déterminés sont réalisés et/ou des canules directionnelles (17) sont positionnées pour transférer les trajectoires chirurgicales, en utilisant la fonction de mouvement spécifique du bras vertical (3) du dispositif correspondant à l'axe z et en déplaçant l'instrument de forage (12) le long de l'axe z du dispositif à six degrés de liberté, pour verrouiller les canules (17) dans le moulage en plâtre (6).

15. Procédé selon l'une ou plusieurs des revendications précédentes, **caractérisé en ce que** pour creuser dans l'os un trou d'une profondeur planifiée par le logiciel de planification d'implant, la sélection de dimensions de l'instrument de forage, particulièrement la longueur du dispositif de fraisage, est calculée par le technicien en prenant en considération les dimensions de l'implant, la profondeur de la gencive et la hauteur de la canule (17).

16. Système de fabrication de guides radiographiques (14) et/ou de guides chirurgicaux (15) et pour le transfert guidé dans la cavité orale humaine de trajectoires chirurgicales planifiées par des systèmes d'imagerie de diagnostic tridimensionnels informatisés comprenant:
- des moyens pour créer une mise en place prothétique et un moulage de mâchoire (6) par l'acquisition d'images du patient pour réaliser un guide radiographique (14);
- des moyens pour réaliser à l'axe central de la au moins une dent du guide radiographique (14) au moins un trou (141) sous des conditions isoparallèles, étant ledit trou (141) passant à travers la pointe de la dent, c'est-à-dire la surface d'occlusion, jusqu'à la surface du guide radiopaque (14) qui viendra en contact avec la gencive,
- des moyens pour incorporer dans le guide radiographique (14) un marqueur de référence (142) d'une forme et taille connues réalisé en matériau radiopaque,
- des moyens pour marquer graphiquement sur la partie du moulage de mâchoire (6) correspondant à la gencive du patient, des soi-disant "points de référence" crestaux proposés,
- des moyens pour positionner le guide radiographique (14) dans la bouche du patient pour acquérir des images en exécutant l'examen topographique informatisé,
- des moyens pour exécuter l'opération de dentisterie d'implants dans un environnement virtuel pour positionner des implants dans des positions considérées comme étant des positions idéales sur la base des images acquises,
- des moyens pour réaligner l'ensemble des images axiales de base obtenues par l'examen tomographique informatisé en utilisant comme référence le marqueur radiographique (142) incorporé dans le guide radiographique (14) de façon à obtenir un nouveau ensemble d'images réalignées dans lequel les images axiales de base sont exactement perpendiculaires à l'axe du marqueur de référence (142) et aux axes des trous (141) de chaque dent, lesdits axes étant réalisés sous des conditions isoparallèles,
- des moyens pour créer un rapport avec les données du patient concernant les coordonnées d'espace de chaque implant considéré indiquant des valeurs se rapportant à la position de translation linéaire x, y, z, la position angulaire θx, θy, θz et se rapportant à la profondeur du trou dans la mâchoire,
- des moyens pour positionner le moulage de mâchoire (6) d'une manière optiquement assistée avec un module laser de pointage (11) sur la plate-forme (5) du dispositif à six degrés de liberté pour réaliser un guide chirurgical (15) complet avec des canules directionnelles (17),
- des moyens pour réaliser un guide chirurgical (15) complet avec des canules directionnelles (17) et la prothèse,
- des moyens pour appliquer le guide chirurgical (15) dans la cavité orale du patient,
- des moyens pour positionner les implants et pour appliquer les prothèses.

17. Dispositif de pointage à six degrés de liberté dans un système d'axes cartésiens x, y, z pour exécuter le procédé de réalisation de guides radiographiques (14) et/ou de guides chirurgicaux (15) selon l'une ou plusieurs des revendications précédentes 1 à 15, ledit dispositif comprend:
- une base rigide (1) pour supporter la surface de travail
- une colonne de support (2) perpendiculaire à ladite base (1),
- un bras (3) faisant saillie de la colonne (2) avec des moyens (4) prévus à son extrémité libre pour fixer amoviblement les instruments chirurgicaux
- une plate-forme (5) sur laquelle le moulage de mâchoire (6) peut être placé et fixé, par des moyens appropriés,
- des moyens pour ajuster la distance entre la plate-forme (5) et le bras (3) le long de l'axe vertical z, des moyens pour déplacer linéairement la plate-forme (5) le long des axes x, y et des moyens pour déplacer angulairement θx, θy, θz ladite plate-forme (5), **caractérisé en ce que** ledit dispositif est pourvu d'un module laser de pointage (11) pour avoir un positionnement optiquement assisté du moulage (6) sur la plate-forme (5), en particulier le laser de pointage (11) est utilisé pour définir rapidement et d'une manière sûre la valeur angulaire de premier ordre θx.
